# EUROPEAN PATENT SPECIFICATION

(11) **EP 1 413 597 B1**
(45) Date of publication and mention of the grant of the patent: **16.07.2008**
(21) Application number: 03024439.6
(22) Date of filing: 23.10.2003
(51) Int. Cl.: C08J 9/00, B60R 13/08

(54) **Thermally expandable material, method for producing the same and soundproof sheet for automobiles**
Thermisch ausdehnbares Material, Verfahren zu seiner Herstellung und Schall-Dämmblatt für Fahrzeuge
Materiau thermoexpansible, son procédé de fabrication et feuille insonorisée pour automobiles

(30) Priority: 23.10.2002 JP 2002308663; 28.03.2003 JP 2003091811
(43) Date of publication of application: 28.04.2004
(73) Proprietor: NICHIAS CORPORATION, Tokyo (JP)
(72) Inventor: Hashimoto, Kinro, Nichias Corporation, Hamamatsu-shi Shizuoka (JP); Murakami, Atsushi, Nichias Corporation, Hamamatsu-shi Shizuoka (JP); Shimizu, Takayoshi, Nichias Corporation, Hamamatsu-shi Shizuoka (JP)
(74) Representative: Grünecker, Kinkeldey, Stockmair & Schwanhäusser Anwaltssozietät

(56) References cited:
- EP-A- 0 761 750
- EP-A- 1 184 149
- WO-A-01/02484
- JP-A- 2001 219 472
- US-B1- 6 187 865
- DATABASE WPI Week 197338, Derwent Publications Ltd., London, GB; Class A18, AN 1973-55200U & JP 48 043 059 A (NITTO ELECTRIC IND CO) 22 June 1973

## Description

### FIELD OF THE INVENTION

The present invention relates to a thermally expandable material, and more particularly to a sponge-like material which expands by a heating operation to increase its thickness. The invention further relates to a method for producing the above-mentioned thermally expandable material, and a soundproof cover for an automobile as its preferred use.

### BACKGROUND OF THE INVENTION

For fluid sealing of joints, soundproofing and heat insulation in architectural structures, industrial instruments and automobiles, various foam materials such as urethane foams and liquid curable sealing materials such as silicone sealants have widely been used. In order to exhibit the sufficient performances of fluid sealing, soundproofing and heat insulation, it is necessary to fill in joint gaps of structures with these materials.

However, according to the liquid curable sealing material such as a silicone sealant, the liquid material is poured into the gap, and cured by chemical reaction or evaporation of a volatile material such as a solvent to fill in the gap. It has therefore the problem that a long period of time is required for a sealing operation and further for curing of the material itself.

On the other hand, a conventional foam material is mounted in a compressed state to a desired site, and the joint gap is filled in with the foam material by thickness recovery due to the elastic force of the material itself. However, the conventional foam material is restored momentarily when the pressure is released. It is therefore necessary to mount the foam material or an assembly using the foam material to a portion necessary for fluid sealing, soundproofing and heat insulation while keeping a state withstanding the restoring force of the foam material in the compressed state. Accordingly, the conventional foam material has the problem that workability for mounting the foam material is extremely deteriorated. When the foam material is made thin, the workability for mounting the foam material is improved. However, the performances of fluid sealing, soundproofing and heat insulation become insufficient because of the development of a gap. Further, a soft foam material is used to reduce the restoring force of the foam material in the compressed state, thereby being able to improve the workability to some degree. However, the workability is not sufficient. Moreover, the foam material having low restoring force also has the problem that the performance of fluid sealing is poor.

As described above, the performances of fluid sealing, soundproofing and heat insulation are incompatible with the mounting properties, so that a sealing material satisfying the respective characteristics has been demanded.

Against such a background, a thermally expandable material is used in which a resin composition containing a thermoplastic resin foamable by heat is arranged in a seal portion, and the seal portion is heated, thereby foaming the resin to block a gap (see Patent Document 1). As a similar thermally expandable material, one containing a resin and a rubber is in heavy usage. However, it is necessary to thoroughly mix the resin and the rubber, so that there is the problem that the production process becomes complicated.

However, the conventional thermally expandable materials made of resins are insufficient in the performance of maintaining the compressed state, and it has been difficult to store them in the compressed state for a long period of time. Besides, they are lacking in the amount of expansion, and insufficient also in terms of the sealing performance and the soundproofing performance.

Further, a sealing material comprising a foamable material has also been developed. For example, using a non-crosslinked foamable rubber composition as a sealing material, the composition is crosslinked and foamed by heat to block a gap. However, a high-temperature atmosphere of about 150°C or more is generally required for crosslinking and foaming. Further, the non-crosslinked rubber composition has adhesion, so that it has the problem that handling properties are poor, which causes the difficulty of mounting it to a desired portion. Furthermore, the non-crosslinked foamable rubber composition is scorched during storage, and crosslinking and foaming sometimes become impossible when needed.

There has also been known a sealing material for filling in a gap by compressing an elastic synthetic resin sponge impregnated with a viscous resinous composition, and restoring the compressed sponge by use of temporal recovery history (for example, see Patent Document 2). However, this requires a complicated process of the impregnation with the viscous resinous composition, resulting in high cost.

Further, a shape recovery foam comprising a closed-cell cellular resin foam has been introduced (for example, see Patent Document 3). However, this foam requires a time as long as tens of days for shape recovery, so that it has the problem that the sufficient functions of fluid sealing, soundproofing, heat insulation, etc. are not immediately developed.

In addition, there have been known a thermally expandable sealing material obtained by compounding a core material comprising a thermoplastic resin and a cladding comprising a crosslinkable polymer (for example, see Patent Document 4), and a thermally expandable tube comprising a mixture of a thermoplastic resin and a crosslinkable rubber (for example, see Patent Document 5 and Patent Document 6). As for these sealing materials, the length in a plane direction decreases, when they are expanded in a thickness direction. Accordingly, there is a fear that a gap is developed to impair sealing properties. Further, the above-mentioned thermally expandable sealing materials also have the problem that a special equipment such as a two-layer extruder is required.

Further, there have also been known a shape-memory urethane polymer foam (for example, see Patent Document 7), and a shape-memory cured rubber formed body obtained by blending a resin such as a polyolefin with a rubber (for example, see Patent Documents 8, 9, 10, 11 and 12). Furthermore, it has been know that polynorbornene or a styrene-butadiene copolymer becomes a shape-memory polymer. A thermally expandable material which expands in a sponge form by heating to increase its thickness can be obtained by producing a sponge using each of these raw materials, compressing it, and further fixing the shape as it is in the compressed state (for example, see Patent Document 13). Further, a shape-memory foam in which a resin is blended with a rubber (for example, see Patent Document 14) has been introduced. However, These are all insufficient in the performance of maintaining the compressed state, so that it is difficult to store them in the compressed state for a long period of time. Further, these are insufficient in the thermal expansion characteristics of rapidly expanding at a specific temperature.
Patent Document 1: JP 57-17698 B
Patent Document 2: JP 48-1903 B
Patent Document 3: JP 10-110059 B
Patent Document 4: JP 56-163181 A
Patent Document 5: JP 52-146482 A
Patent Document 6: JP 53-78282 A
Patent Document 7: JP 7-39506 B
Patent Document 8: JP 9-309986 A
Patent Document 9: JP 2000-191847 A
Patent Document 10: JP 2000-217191 A
Patent Document 11: JP 2001-40144 A
Patent Document 12: JP 2002-12707 A
Patent Document 13: JP 8-199080 A
Patent Document 14: JP 2000-1558 A

### SUMMARY OF THE INVENTION

As described above, no sealing material satisfying various characteristics such as sealing properties, heat insulation and soundproofing, and mounting properties at the same time has hitherto been obtained.

It is therefore an object of the invention to provide a thermally expandable material requiring only heating, that is, excellent in mounting properties and largely increasing in thickness by heating to show excellent sealing properties, heat insulation, soundproofing, etc.

Another object of the invention is to provide a thermally expandable material made of a resin, easily produced, capable of maintaining the compressed state for a long period of time, large in the amount of expansion by heating, and excellent in the sealing performance and the soundproofing performance.

A still other object of the invention is to provide a method for producing such a thermally expandable material, and a soundproof cover for an automobile engine, which is excellent in the soundproofing performance.

Other objects and effects of the invention will become apparent from the following description.

As a result of extensive studies, the present inventors found that a thermally expandable material which expands by a heating operation to increase its thickness is obtained by heating and compressing a foam obtained by crosslinking and foaming a composition containing (a) a crosslinkable polymer material and (b) a crystalline thermoplastic resin having oxygen in its molecule, then, cooling it in a compressed state, and releasing the pressure.

Further, the inventors found that a thermally expandable material largely improved in the performance of maintaining a compressed state and in the amount of expansion by heating is obtained by using a crosslinkable thermoplastic resin.

Furthermore, the inventors found that a soundproof cover for an automobile engine, which is excellent in mounting properties and the soundproofing performance, is obtained by using such a thermally expandable material for the cover.

That is, the above-described objects of the invention have been achieved by providing the followings.

In a first aspect of the present invention (hereinafter referred to as "first invention"), the invention provides:

A method for producing a thermally expandable material, which comprises:
forming, into a predetermined shape, a foam composition comprising:
   100 parts by weight of (a) a crosslinkable polymer material; and
   5 to 300 parts by weight of (b) a crystalline thermoplastic resin having oxygen in its molecule;
allowing the resulting formed product to undergo crosslinking and foaming;
heating and compressing the resulting foam at a temperature equal to or higher than a melting point of the crystalline thermoplastic resin (b); and
cooling the compressed product to a temperature lower than the melting point of the crystalline thermoplastic resin (b) as it is compressed, wherein the cooled product is expandable by heat from the compressed state.

A thermally expandable material obtainable by said method.

In a second aspect of the present invention (hereinafter referred to as "second invention"), the invention provides:

A method for producing a thermally expandable material, which comprises:
forming, in a predetermined shape, a foam composition comprising a crosslinkable crystalline thermoplastic resin, said resin being an ethylene-vinyl acetate copolymer;
crosslinking and foaming the resulting formed product;
heating and compressing the resulting foam at a temperature equal to or higher than a melting point of the crosslinkable crystalline thermoplastic resin; and
cooling it to a temperature lower than the melting point of the crosslinkable crystalline thermoplastic resin as it is compressed, wherein the cooled product is expandable by heat from the compressed state.

A thermally expandable material obtainable by said method.

Furthermore, the present invention (i.e., in both fist and second aspect of the invention) provides a soundproof cover for an automobile, which comprises a joint material comprising the thermally expandable material.

### BRIEF DESCRIPTION OF THE DRAWINGS

Fig. 1 is a schematic perspective view showing one embodiment of an engine soundproof cover (for a V type engine).
Fig. 2 is a schematic view for illustrating a mounted state (before heating) of the engine soundproof cover shown in Fig 1 to an engine.
Fig. 3 is a schematic view for illustrating a mounted state (after heating) of the engine soundproof cover shown in Fig 1 to an engine.
Fig. 4 is a schematic view showing a thickness measuring device used in Examples.
Fig. 5 is a graph showing the relationships between the temperature and the thickness of respective test pieces of Examples 1A to 3A.
Fig. 6 is a graph showing the relationships between the temperature and the thickness of respective test pieces of Examples 4A to 6A.
Fig. 7 is a graph showing the relationships between the temperature and the thickness of respective test pieces of Comparative Examples 1A to 3A.
Fig. 8 is a graph showing the relationships between the temperature and the thickness of respective test pieces of Comparative Examples 4A and 5A.
Fig. 9 is a graph showing the relationships between the temperature and the thickness at the time when respective test pieces in Examples and Comparative Examples thermally expand.
Fig. 10 is a graph showing the relationships between the time and the thickness at the time when respective test pieces in Example and Comparative Example are allowed to stand at room temperature.
Fig. 11 is a schematic diagram for illustrating an expansion mechanism of a thermally expandable material of the invention.

The reference numerals used in the drawings represent the followings, respectively.
10: Engine Soundproof Cover
11: Cover Body
12: Foam Material
13: Intake Manifold
14: Intake Collector
15: Fastening Holes
20: Engine
21: Thermally Expandable Material
41: Laser Displacement Gauge
42: Cylindrical Furnace
43: Test Piece
44: Thermocouple
45: Laser Beam

### DETAILED DESCRIPTION OF THE INVENTION

The first invention will be described in detail below.

The thermally expandable material of the first invention is produced using as a starting material a foam composition containing (a) a crosslinkable polymer material (hereinafter also referred to simply as a "polymer material (a)") and (b) a crystalline thermoplastic resin having oxygen in its molecule (hereinafter also referred to simply as a "thermoplastic resin (b)") as indispensable components, and further containing additives used in a general polymer material, such as a crosslinking agent, a crosslinking accelerator, a crosslinking assistant, a foaming agent, a filler, a processing aid, a softening agent, an antioxidant and a coloring agent, as needed. The foam composition is obtained using a mixing apparatus used in mixing of a general known polymer material. For example, a rubber kneading roll, a double-screw extruder, a single-screw extruder, a Banbury mixer, a pressure kneader or the like may be used, but the mixing apparatus is not limited thereto. Mixing of the thermoplastic resin (b) while fusing it by heating during mixing is preferred, because the dispersion of the crosslinkable polymer material (a) proceeds, and the mixed composition can be easily obtained. Further, the crosslinkable polymer material (a), the thermoplastic resin (b) and various additives may be dissolved or dispersed in an appropriate medium to a liquid state, and mixed in the liquid state.

Then, the above-mentioned foam composition is formed with an appropriate forming apparatus, and crosslinked and foamed to obtain a foam. When the crosslinking agent such as sulfur or a peroxide is used in crosslinking, the foam composition is crosslinked by heating. When a chemical foaming agent is used as the foaming agent, the foam composition is also similarly foamed by heating. Further, when the crosslinking agent and the chemical foaming agent are used together, crosslinking and foaming occur at the same time by heating. This is preferred as a method for preparing the foam in the first invention. The forming apparatus include a press, an extruder, a calender roll, etc., but the first invention should not be construed as being limited by the kind of forming apparatus. Further, in heating, a hot-air heating furnace, a glass beads fluidized bed, a molten salt tank, a hot press, a high-frequency heater or the like can be used. It is also possible to use them in combination. The heating temperature is preferably from 150 to 250°C, and more preferably from 170 to 220°C. When the heating temperature is lower than 150°C, a long period of time is required for crosslinking and foaming. When the temperature is higher than 250°C, the foam composition deteriorates in some cases.

The bulk density of the foam is preferably from 10 kg/m³ to less than 1,000 kg/m³, more preferably from 20 kg/m³ to less than 500 kg/m³, and still more preferably from 50 kg/m³ to less than 300 kg/m³. When the bulk density exceeds 1,000 kg/m³, it becomes difficult to compress the foam, and the difference in thickness between before and after thermal expansion becomes small, which makes it difficult to sufficiently block the gap. Further, the foam becomes hard to pose a problem with regard to shape-retaining properties. On the other hand, when the bulk density is less than 10 kg/m³, the strength of the foam is decreased, and the foam becomes too soft, resulting in insufficient thermal expansion properties.

The expansion ratio of the foam can be set by the amount of the foaming agent added, when the chemical foaming agent is used. When the amount of the chemical foaming agent is increased, the expansion ration becomes high. On the other hand, when it is decreased, the expansion ratio becomes low. Further, the expansion ratio can also be set by the viscosity of the composition in a non-foamed state. Lowered viscosity results in high expansion ratio, whereas elevated viscosity results in low expansion ratio. Accordingly, the above-mentioned expansion ratio can be obtained by adjusting the amount of the foaming agent added or the viscosity of the composition in a non-foamed state.

Then, the above-mentioned foam is heated at a temperature equal to or higher than a melting point of the thermoplastic resin (b), for example, within the range of 80 to 200°C, and compressed so as to give a specified thickness. After keeping for a specified period of time, it is cooled to a temperature lower than a melting point of the thermoplastic resin (b), for example, to 25 to 80°C, preferably to room temperature, as it is kept in the compressed state, and the pressure is released, thereby obtaining the thermally expandable material of the first invention. In order to obtain the excellent respective performances of fluid sealing, soundproofing and heat insulation at a treated site, the amount of compression is preferably half or less of the thickness of the foam before compression.

In the above-mentioned sequence of compressing operations, for example, the foam may be compressed by heating with a hot press, and cooled in the compressed state. Further, the foam may be heated in a hot-air heating furnace, compressed with a press immediately after it has been taken out of the hot-air heating furnace, and cooled. In order to compress the foam, a weight may be placed thereon without using the press. Further, for continuous production, the foam may be compressed by heating with a hot roll, using a calender roll, and cooled with a cold roll as it is compressed. Furthermore, when crosslinking or foaming is carried out by heating, the foam may be compressed and cooled with a cold roll immediately after it has been heated utilizing heating in crosslinking or foaming. The compressing operations are not limited thereto, and any method can be employed, as long as the foam can be compressed by heating and cooled in the compressed state. Further, the foam may be cooled before the temperature of the foam crosslinked and foamed by heating falls, without conducting the heating operation after the preparation of the foam.

The foam can take any shape after compression. For example, when the foam is compressed with a flat plate, a sheet-like thermally expandable material is obtained. When the foam is compressed with a plate having a surface finish such as embossing, a surface shape thereof is transferred to the thermally expandable material. Further, a site to be compressed may be any, and either the whole surface or only a part of the foam may be compressed.

The thermally expandable material of the first invention thus obtained maintains the compressed state at room temperature, and released from the compressed state by heating to expand. Accordingly, the thermally expandable material of the first invention has respective mechanisms for the shape-retaining properties and the thermal expansion properties. Although the first invention is not limited by a specific theory, the inventors presume that the shape-retaining properties and the thermal expansion properties are developed by the following mechanisms.

In the foam containing the crosslinkable polymer material (a) and the thermoplastic resin (b), the force of restoring the thickness acts by the elasticity of the crosslinkable polymer material (a), so that a shape-retaining force equal to or more than the restoring force is required in order to develop the shape-retaining properties. On the other hand, the thermoplastic resin (b) is softened on heating to decrease rigidity, to a liquid state depending on the circumstances. In such a state, it is possible to deform the foam by a low stress. Further, the foam is cooled in a deformed state to form a hardened product, thereby increasing rigidity, which makes it possible to keep the deformed shape. Accordingly, when the foam containing the thermoplastic resin (b) is cooled as it is compressed by heating, the foam tends to restore the thickness by its elastic restoring force. However, the compressed state is maintained by the hardened thermoplastic resin (b) to develop the shape-retaining properties.

The thermally expandable material shape-retained in the above-mentioned compressed state has a shape-retaining force higher than the restoring force at room temperature. Accordingly, when the restoring force exceeds the shape-retaining force, the thermal expansion restoring properties based on the restoring force is developed. For that purpose, it becomes an effective means to decrease the shape-retaining force, and in the thermally expandable material of the first invention, the shape-retaining force is decreased by application of heat. As described above, the thermoplastic resin (b) is softened on heating, and it becomes possible to deform the foam by a low stress. Accordingly, the hardened product of the thermoplastic resin is softened by heating to decrease rigidity, thereby lowering the shape-retaining force. On the other hand, the crosslinkable polymer material (a) is crosslinked in the shape of the foam, and the force acts which tends to recover to the shape of the foam by elastic restoration. With heating of the thermally expandable material, the elastic restoring force comes to exceed the shape-retaining force. As a result, the compressed state is released to develop the thermal expansion properties.

The mechanisms for developing the shape-retaining properties and the thermal expansion properties of the thermally expandable material of the first invention are as described above.

Further, in the first invention, the thermoplastic resin (b) is crystalline. According to an amorphous thermoplastic resin, rapid thermal expansion at a specific temperature does not occur. The inventors consider the reason for this as follows.

When the thermoplastic resin is higher in rigidity at a temperature around room temperature at which the shape-retaining properties are developed, and lower in thermal expansion at a high temperature at which the thermal expansion properties are developed, the thermally expandable material good in both the shape-retaining properties and the thermal expansion properties is obtained. The thermoplastic resin gradually decreased in rigidity with a rise in temperature is very slowly restored in a temperature region in which the rigidity is decreased, so tat the resin can not block the gap immediately, and it is also difficult to store the resin in the compressed state. As the thermoplastic resin, one rapidly decreased in rigidity at a specific temperature to be fluidized is preferred, because the thermally expandable material having a wide storable temperature region in which the shape-retaining properties are developed and a wide thermally expandable temperature region in which the gap can be immediately blocked is obtained. The thermoplastic resins include a crystalline resin and an amorphous resin. Of these, the crystalline thermoplastic resin is rapidly softened in a temperature region equal to or higher than the melting point thereof, and mostly fluidized. In contrast, the amorphous resin is softened at a temperature equal to or higher than the glass transition temperature thereof, but rapid softening as observed in the melting point of the crystalline resin does not occur. Accordingly, the crystalline thermoplastic resin is preferred as the thermoplastic resin of the first invention. The amorphous resin such as an acrylic resin or polystyrene can not provide the thermally expandable material excellent in both the shape-retaining properties and the thermal expansion properties, and shows the behavior of slowly expanding in a wide temperature region. It becomes therefore impossible to block the gap immediately by heating, and a problem is practically encountered as the thermally expandable material.

The reason why it is presumed that the thermally expandable material which rapidly thermally expands at a specific temperature is obtained by using the crystalline thermoplastic resin (b) is as described above. However, the first invention should not be construed as being limited to this theory.

Further, the thermoplastic resin (b) has oxygen in its molecule. In a thermoplastic resin having no oxygen in its molecule, rapid thermal expansion at a specific temperature does not occur. The inventors consider the reason for this as follows.

In the thermally expandable material of the first invention, a part of the thermoplastic resin (b) exists on a cell wall surface of the foam. The thermoplastic resin (b) on the cell wall surface of the foam acts as an adhesive, and adheres to the crosslinkable polymer material (a) or the thermoplastic resin (b) on an opposite cell wall in the same cell, whereby it becomes possible to maintain a state in which respective cells are compressed, that is, a shape in which the whole foam is compressed.

The thermoplastic resin (b) acting as the adhesive is activated in molecular movement by heating, and rapidly loses adhesive force at a temperature equal to or higher than the melting point. Accordingly, as the thermoplastic resin (b), it is necessary to use a resin having high adhesion in a temperature region lower than a temperature at which thermal expansion occurs. In general, the thermoplastic resin having higher surface energy is better in adhesion. The thermoplastic resin having oxygen in its molecule has high surface energy and good adhesion, compared to the thermoplastic resin having no oxygen in its molecule. Accordingly, in the first invention, it is necessary to use the thermoplastic resin (b) having oxygen in its molecule. When a polyolefin represented by polyethylene or polypropylene, which is a thermoplastic resin having no oxygen in its molecule, is used in place of the thermoplastic resin having oxygen, a problem is encountered with regard to the shape-retaining properties. Before the occurrence of a rapid increase in thickness caused by crystal fusion of the crystalline resin acting as the adhesive, the adhesion of the cell walls is released because of its weak adhesive force, thus showing the behavior of slowly increasing the thickness in a wide temperature region. It becomes therefore impossible to block the gap immediately by heating, and a problem is practically encountered as the thermally expandable material. On the other hand, the crystalline thermoplastic resin (b) having oxygen in its molecule has good shape-retaining properties, and provides the thermally expandable material which rapidly thermally expands at a specific temperature.

The reason why it is presumed that the thermally expandable material which rapidly thermally expands at a specific temperature is obtained by using the thermoplastic resin (b) having oxygen in its molecule is as described above. However, the first invention should not be construed as being limited to this theory.

Specific examples of each material usable in the first invention are shown below.

Examples of the thermoplastic resins (b) usable in the first invention include but are not limited to an ethylene-vinyl acetate copolymer, an ethylene-acrylic acid copolymer, an ethylene-vinyl alcohol copolymer, polybutylene succinate, polyethylene terephthalate, polyethylene naphthalate, polylactic acid, polycaprolactone, a polyamide, a polyester-based thermoplastic elastomer, a polyamide-based thermoplastic elastomer, a thermoplastic polyurethane, polyhydroxybutylate, polyvinyl alcohol, an ionomer, etc. Further, resins obtained by copolymerizing another monomer with these or resins obtained by grafting another oligomer to these can also be used. Furthermore, the thermoplastic resins (b) can also be crosslinked in small amounts. In this case, the crosslinkable polymer material (a) is required to have a higher crosslinking density than the thermoplastic resins (b).

As the thermoplastic resins (b), the ethylene-vinyl acetate copolymer is particularly preferred, because raw materials therefor are inexpensive, and the copolymer is easily available and has an appropriate temperature region of about 50°C to about 100°C in melting point. Further, when this copolymer is used, the thermally expandable material excellent in both the shape-retaining characteristics and the thermal expansion characteristics is obtained.

On the other hand, as the polymer materials (a), there can be used various rubber materials, thermoplastic resins or thermosetting resins. Examples thereof include but are not limited to various rubber materials such as natural rubber, IIR (butyl rubber), CR (chloroprene rubber), SBR (styrene rubber), NBR (nitrile rubber), HNBR (hydrogenated nitrile rubber), EPDM (ethylene-propylene-diene copolymer rubber), EPM (ethylene-propylene copolymer rubber), silicone rubber, fluorosilicone rubber, fluororubber, acrylic rubber, epichlorohydrin rubber, polyether rubber and polysulfide rubber, various thermoplastic resins such as a polyether, polyethylene, a polyamide and a polyester, and various thermosetting resins such as a phenol resin and an epoxy resin. Further, materials obtained by copolymerizing another monomer with these can also be used.

Particularly, when the rubber material is used as the polymer material (a), the thermally expandable material which is flexible and excellent in both the shape-retaining characteristics and the thermal expansion characteristics is preferably obtained. Of the rubber materials, the ethylene-propylene-diene copolymer rubber is preferred, because of easy crosslinking and a good balance between cost and heat resistance. The nitrile rubber is preferred, because of easy crosslinking and a good balance between cost and oil resistance. Accordingly, the ethylene-propylene-diene copolymer rubber is preferably used for an application requiring the heat resistance, and the nitrile rubber is preferably used for an application requiring the oil resistance. For an application requiring both the heat resistance and the oil resistance, the fluororubber, the acrylic rubber, the hydrogenated nitrile rubber, the fluorosilicone rubber, etc. are preferably used, although the cost rises. The kind of rubber material used may be appropriately selected depending on its application.

When the compounding ratio of the polymer material (a) in the foam composition is high, thermal expansion becomes easy to occur by the elasticity of the polymer material (a). However, a problem is encountered with regard to the shape-retaining properties in some cases. On the other hand, when the compounding ratio of the thermoplastic resin (b) increases, the shape-retaining properties are improved, but a problem is encountered with regard to the thermal expansion properties in some cases. Accordingly, in the first invention, it is necessary to select a proper compounding ratio of the thermoplastic resin (b) to the polymer material (a). Specifically, the thermoplastic resin (b) is incorporated preferably in an amount of 5 to 300 parts by weight, more preferably in an amount of 10 to 200 parts by weight, and still more preferably in an amount of 20 to 100 parts by weight, based on 100 parts by weight of the polymer material (a). When the compounding ratio of the thermoplastic resin is less then 5 parts by weight, a problem is encountered with regard to the shape-retaining properties. When it exceeds 500 parts by weight, a problem is encountered with regard to the thermal expansion properties.

In the first invention, the polymer material (a) is required to be crosslinked by any proper method. For example, a crosslinking agent may be added to the foam composition. The nitrile rubber or the ethylene-propylene-diene copolymer rubber can be crosslinked, for example, using a known compound such as sulfur, a sulfur compound or a peroxide. The sulfur compounds include but are not limited to, for example, compounds releasing active sulfur at high temperatures such as di-2-benzothiazolyl disulfide, tetramethylthiuram disulfide, tetraethylthiuram disulfide, tetrabutylthiuram disulfide, tetrakis(2-ethylhexyl)thiuram disulfide, dipentamethylenethiuram tetrasulfide and 4,4'-dithiodimorpholine. The peroxides include but are not limited to, for example, benzoyl peroxide, 1,1-bis(t-butylperoxy)-3,3,5-tximethylcyclohexane, 1,1-bis(t-butylperoxy)cyclodecane, n-butyl--4,4-bis(t-butylperoxy)valerate, dicumyl peroxide, t-butyl peroxybenzoate, di-t-butyl peroxide, α,α'-bis(t-butylperoxy)diisopropylbenzene, 2,5-dimethyl-2,5-di(t-butylperoxy)hexane, 2,5-dimethyl-2,5-di(t-butylperoxy)hexyne-3, t-butylperoxycumin, etc. When the polymer material (a) is the fluororubber, a compound such as a polyol, a polyamine or a peroxide can be used.

Although the amount of the crosslinking agent added is not particularly limited, it is preferably from 0.1 to 20 parts by weight, more preferably from 0.2 to 10 parts by weight, and still more preferably from 0.3 to 5 parts by weight, based on 100 parts by weight of the polymer material (a). When the amount of the crosslinking agent added is less than 0.1 part by weight, the foam composition is deteriorated in the heat resistance and further in the thermal expansion properties. Conversely, when it exceeds 20 parts by weight, the foam composition becomes hard and brittle.

It is also possible to crosslink the polymer material (a) by irradiation of an ionizing radiation such as an electron beam or a γ ray. A functional group-containing material which undergoes crosslinking reaction by heating without addition of the crosslinking agent may be used as the polymer material (a). Further, it is also possible to use a plurality of crosslinking methods in combination. For example, after crosslinking by use of sulfur, the polymer material may be irradiated with the ionizing radiation. However, particularly, according to the crosslinking method using sulfur or the sulfur compound, crosslinking is possible also in an oxygen atmosphere to increase the degree of freedom of a production process, the rubber material is generally widely used in curing, and a raw material and a production apparatus are not special and easily available. This method is therefore preferred in the first invention.

When sulfur or the sulfur compound is used for crosslinking of the polymer material (a), the crosslinking accelerator is preferably used together. The time requiring for crosslinking is shortened by using the crosslinking accelerator together, so that productivity is improved and the composition excellent in heat resistance can be obtained. The crosslinking accelerators include but are not limited to, for example, hexamethylenetetramine, n-butylaldehydeaniline, N,N'-diphenylthiourea, trimethylthiourea, N,N'-diethylthiourea, 1,3-diphenylguanidine, 1,3-di-o-tolylguanidine, 1-o-tolylguanide, a di-o-tolylguanidine salt of dicatechol borate, 2-mercaptobenzothiazole, di-2-benzothiazolyl disulfide, a zinc salt of 2-mercaptobenzothiazole, a cyclohexylamine salt of 2-mercaptobenzothiazole, 2-(N,N-diethylthiocarbamoylthio)benzothiazole, 2-(4'-morpholinodithio)benzothiazole, N-cyclohexyl-2-benzothiazolylsulfenamide, N-tert-butyl-2--benzothiazolylsulfenamide, N-oxydiethylene-2-benzothiazolylsulfenamide, N,N'-dicyclohexyl-2-benzothiazolylsulfenamide, tetramethylthiuram disulfide, tetraethylthiuram disulfide, tetrabutylthiuram disulfide, tetrakis(2-ethylhexyl)thiuram disulfide, tetramethylthiuram monosulfide, dipentamethylenethiuram tetrasulfide, piperidine pentamethylenedithiocarbamate, pipecoline pipecoline-1-dithiocarboxylate, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, zinc dibenzyldithiocarbamate, sodium diethyldithiocarbamate, sodium dibutyldithiocarbamate, copper dimethyldithiocarbamate, ferric dimethyldithiocarbamate, tellurium diethyldithiocarbamate, zinc isopropylxanthate, 4,4'-dithiomorpholine, etc. The plurality of crosslinking agents can also be used in combination. Further, it is preferred that zinc oxide and stearic acid are used for a purpose similar to that of the crosslinking agent.

Further, when the peroxide is used for crosslinking of the polymer material (a), the crosslinking assistant such as a multifunctional monomer or a multifunctional polymer is preferably used. The use of the crosslinking assistant can provide the composition excellent in heat resistance. The crosslinking assistants include but are not limited to, for example, multifunctional monomers such as ethylene dimethacrylate, polyethylene glycol dimethacrylate, trimethylolpropane trimethacrylate, cyclohexane methacrylate, zinc diacrylate, allyl methacrylate, divinylbenzene, diallyl itaconate, triallyl isocyanurate, triallyl cyanurate, diallyl phthalate, vinyltoluene, vinylpyridine, divinyldichlorocyan and triallyl phosphate; multifunctional polymers such as vinylpolybutadiene; p-quinonedioxime, p,p'-dibenzoylquinonedioxime, N'-m-phenylenebismaleimide, sulfur, etc.

In the first invention, the foam composition is required to be foamed by any proper means. For example, the chemical foaming agent which generates a gas by heating may be added to the foam composition. The chemical foaming agents include, for example, organic foaming agents such as a sulfonylhydrazide (for example, p,p'-oxybis(benzenesulfonylhydrazide) (OBSH), benzenesulfonylhydrazide or toluenesulfonylhydrazide), an azo compound (for example, azodicarbonamide (ADCA) or azobisisobutyronitrile) and a nitroso compound (for example, N,N'-dinitrosopentamethylenetetramine or N,N'-dimethyl--N,N'-dinitrosoterephthalamide); and inorganic foaming agents such as sodium bicarbonate and ammonium bicarbonate. Of these, BOSH, ADCA or a foaming agent in which they are used in combination is preferred. The amount of the chemical foaming agent added is preferably from 1 to 40 parts by weight, and more preferably from 3 to 20 parts by weight, based on 100 parts by weight of the polymer material (a). When the amount of the chemical foaming agent added is less than 1 part by weight, only a foam having an expansion ratio as low as less than 3 is obtained. Exceeding 40 parts by weight results in failure to obtain the target foam because of over foaming. In order to lower the decomposition temperature of the foaming agent, a compound having a catalytic function can be used in combination, and it is necessary to adjust so as to achieve a balance between the crosslinking temperature and the decomposition temperature of the foaming agent. When ADCA is used as the chemical foaming agent, the use of a metal oxide such as zinc oxide, a metal salt of a fatty acid such as zinc stearate or a foaming auxiliary agent such as urea can decrease the decomposition temperature of the foaming agent. Chlorofluorocarbon, a hydrocarbon, water, etc. can also be added as the foaming agents to the foam composition without using the chemical foaming agent, and vaporized by heating to foam the composition. As a method using no chemical foaming agent, water in the composition can be vaporized by irradiation of microwaves to foam the composition. Further, the foam composition may be dissolved or dispersed in an appropriate medium, bubbled by mechanical stirring or blowing of a gas, and gelled to carry out crosslinking. However, in the first invention, foaming with the chemical foaming agent is a preferred foaming method, because it is possible to carry out crosslinking and foaming at the same time, the production process is simplified, and further, the raw materials are easily available.

In the first invention, a plasticizer is preferably used in order to decrease the viscosity of the foam composition to make it easy to foam the composition. The plasticizers include but are not limited to, for example, a paraffinic oil, a naphthenic oil, an aromatic oil, a silicone-based oil, an ester-based oil, an ether-based oil, a coumarone oil, asphalt, a coumarone resin, a paraffin wax, a fatty acid soap, bisarmid, a liquid rubber, etc. It is also possible to use them in combination. The amount of the plasticizer added is preferably from 5 to 100 parts by weight, and particularly preferably from 20 to 70 parts by weight, based on 100 parts by weight of the polymer material (a). When the amount of the plasticizer added is less than 5 parts by weight, the viscosity of the foam composition increases, resulting in poor processability, and in insufficient foaming to increase the bulk density of the foam. On the other hand, exceeding 100 parts by weight unfavorably results in too low viscosity of the foam composition thereby deteriorating processability. Further, it is preferred that the plasticizer is selected from ones having compatibility with the polymer material (a). For example, when the crosslinkable polymer material (a) is the ethylene-propylene-diene copolymer rubber, the paraffinic oil, the naphthenic oil, the aromatic oil or the like is preferably selected. When the polymer material (a) is the nitrile rubber, the ester-based oil, the ether-based oil or the like is preferably selected.

In the first invention, in order to reduce the cost of the foam composition, to reinforce the composition, and to improve the processability and heat resistance thereof, the filler may be used. The fillers include but are not limited to, for example, carbon black, calcium carbonate, magnesium carbonate, silica, magnesium silicate, clay, mica, glass, etc.

As other components, components which have hitherto been known can be used. Examples thereof include but are not limited to the processing aid, the coloring agent and the antioxidant.

The above-mentioned thermally expandable material according to the first invention can be used for fluid sealing of joints, soundproofing and heat insulation in architectural structures, industrial instruments and automobiles, similarly to a conventional material. As described above, the foam material is usually mounted in the compressed state to a site to be treated, and the joint gap is filled in with the foam material by shape recovery due to the elastic force of the material itself. However, the conventional foam material is restored momentarily when the pressure is released. It is therefore necessary to mount the foam material to the site to be treated while keeping a state withstanding the restoring force of the foam material in the compressed state. Accordingly, workability for mounting the foam material is extremely deteriorated. When the foam material is made thin, the workability for mounting the foam material is improved. However, the respective performances of fluid sealing, soundproofing and heat insulation become insufficient because of the development of the gap. Further, a soft foam material is used to reduce the restoring force of the foam material in the compressed state, thereby being able to improve the workability to some degree. However, the effect thereof is slight, and the performance of fluid sealing is rather deteriorated.

In contrast, according to the thermally expandable material of the first invention, the shape is retained in the compressed state, so that the thermally expandable material can be extremely easily mounted onto the site to be treated. Further, the thermally expandable material of the first invention expands in a sponge form by heating to fill in the gap, so that the respective performances of fluid sealing, soundproofing and heat insulation are sufficiently exhibited.

In the above, heating for thermal expansion can be conducted, for example, by a method of pressing a hot plate heated at a specified temperature to the thermally expandable material or blowing a hot air thereto. The heating temperature at that time can be appropriately set according to the melting point of the thermoplastic resin (b) and/or the amount of the thermoplastic resin (b) added. The lower the melting point of the thermoplastic resin (b) is, the lower temperature is required for thermal expansion. Further, the smaller the amount of the thermoplastic resin (b) added is, the lower temperature is required for thermal expansion. When the amount of the thermoplastic resin (b) added is small, thermal expansion occurs at a temperature lower than the melting point, and is initiated by heating to at least the melting point of the thermoplastic resin (b), although the thermal expansion temperature depends on amount of the thermoplastic resin .(b) used. For example, an ethylene-vinyl acetate copolymer having a melting point of about 50°C to about 100°C depending on the copolymerization ratio of ethylene and vinyl acetate which are monomer units is commercially available, and the copolymer having an appropriate melting point can be selected. Further, when thermal expansion at a higher temperature is desired, for example, polyethylene terephthalate having a melting point of about 250°C or the like can be used.

Further, when the thermally expandable material is used in a machine which generates heat by its operation, such as an industrial instrument or an automobile described later, it expands in a sponge form by the heat generated by the operation of the machine. Accordingly, the procedure of applying heat becomes unnecessary in some cases.

The second invention will be described in detail below.

The thermally expandable material of the second invention is a foam composition containing a crosslinked crystalline thermoplastic resin, said resin being an ethylene-vinylacetate copolymer.

An ethylene-vinyl acetate copolymer is inexpensive, easily available and has a proper foaming temperature of about 50°C to 140°C in melting point. Further, the use of the ethylene-vinyl acetate copolymer also results in the advantage that the thermally expandable material excellent in both the shape-retaining characteristics and the thermal expansion characteristics is obtained.

various additives can be added to the above-mentioned crosslinkable crystalline thermoplastic resin as needed. For example, in foaming described later, a plasticizer is preferably added in order to decrease the viscosity of the foam composition to make it easy to foam the composition. The plasticizers include but are not limited to, for example, a paraffinic oil, a naphthenic oil, an aromatic oil, a silicone-based oil, an ester-based oil, an ether-based oil, a coumarone oil, asphalt, a coumarone resin, a paraffin wax, a fatty acid soap, bisarmid, a liquid rubber, etc. It is also possible to use them in combination. Further, it is preferred that the plasticizer is selected from ones having compatibility with crosslinkable crystalline thermoplastic resin.

In addition, in order to reduce the cost of the foam composition, to reinforce the composition, and to improve the processability and heat resistance thereof, a filler may be used. The fillers include but are not limited to, for example, carbon black, calcium carbonate, magnesium carbonate, silica, magnesium silicate, clay, mica, glass, etc. Further, additives used in a general polymer material, such as a processing aid, a softening agent, an antioxidant and a coloring agent, may be mixed.

In order to crosslink the foam composition containing the above-mentioned crosslinkable crystalline thermoplastic resin, either chemical crosslinking using a chemical crosslinking agent or ionizing radiation crosslinking irradiating the composition with an ionizing radiation is possible.

As the chemical crosslinking agents, there can be used various agents ordinarily employed, and crosslinking can be carried out using a known compound such as sulfur, a sulfur compound or a peroxide. The sulfur compounds include but are not limited to, for example, di-2-benzothiazolyl disulfide, tetramethylthiuram disulfide, tetraethylthiuram disulfide, tetrabutylthiuram disulfide, tetrakis(2-ethylhexyl)thiuram disulfide, dipentamethylenethiuram tetrasulfide, 4,4'-dithiodimorpholine, etc., which release active sulfur at high temperatures.

When sulfur or the sulfur compound is used, the crosslinking accelerator is preferably used together. The time requiring for crosslinking is shortened by using the crosslinking accelerator together, so that productivity is improved and the composition excellent in heat resistance can be obtained. The crosslinking accelerators include but are not limited to, for example, hexamethylenetetramine, n-butylaldehydeaniline, N,N'-diphenylthiourea, trimethylthiourea, N,N'-diethylthiourea, 1,3-diphenylguanidine, 1,3-di-o-tolylguanidine, 1-o-tolylguanide, a di-o-tolylguanidine salt of dicatechol borate, 2-mercaptobenzothiazole, di-2-benzothiazolyl disulfide, a zinc salt of 2-mercaptobenzothiazole, a cyclohexylamine salt of 2-mercaptobenzothiazole, 2-(N,N-diethylthiocarbamoylthio)benzothiazole, 2-(4'-morpholinodithio)benzothiazole, N-cyclohexyl-2-benzothiazolylsulfenamide, N-tert-butyl-2-benzothiazolylsulfenamide, N-oxydiethylene-2-benzothiazolylsulfenamide, N,N'-dicyclohexyl-2-benzothiazolylsulfenamide, tetramethylthiuram disulfide, tetraethylthiuram disulfide, tetrabutylthiuram disulfide, tetrakis(2-ethylhexyl)thiuram disulfide, tetramethylthiuram monosulfide, dipentamethylenethiuram tetrasulfide, piperidine pentamethylenedithiocarbamate, pipecoline pipecoline-1-dithiocarboxylate, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, zinc dibenzyldithiocarbamate, sodium diethyldithiocarbamate, sodium dibutyldithiocarbamate, copper dimethyldithiocarbamate, ferric dimethyldithiocarbamate, tellurium diethyldithiocarbamate, zinc isopropylxanthate, 4,4'-dithiomorpholine, etc. The plurality of crosslinking agents can also be used in combination. Further, it is preferred that zinc oxide and stearic acid are used for a purpose similar to that of the crosslinking agent.

The peroxides include but are not limited to, for example, benzoyl peroxide, 1,1-bis(t-butylperoxy)-3,3,5-trimethylcyclohexane, 1,1-bis(t-butylperoxy)cyclodecane, n-butyl-4,4-bis(t-butylperoxy)valerate, dicumyl peroxide, t-butyl peroxybenzoate, di-t-butyl peroxide, α,α'-bis(t--butylperoxy)diisopropylbenzene, 2,5-dimethyl-2,5-di(t-butylperoxy)hexane, 2,5-dimethyl-2,5-di(t-butylperoxy)hexyne-3, t-butylperoxycumin, etc.

Further, when the peroxide is used, the crosslinking assistant such as a multifunctional monomer or a multifunctional polymer is preferably used. The use of the crosslinking assistant can provide the composition excellent in heat resistance. The crosslinking assistants include but are not limited to, for example, multifunctional monomers such as ethylene dimethacrylate, polyethylene glycol dimethacrylate, trimethylolpropane trimethacrylate, cyclohexane methacrylate, zinc diacrylate, allyl methacrylate, divinylbenzene, diallyl itaconate, triallyl isocyanurate, triallyl cyanurate, diallyl phthalate, vinyltoluene, vinylpyridine, divinyldichlorocyan and triallyl phosphate; multifunctional polymers such as vinylpolybutadiene; p-quinonedioxime, p,p'-dibenzoylquinonedioxime, N'-m-phenylenebismaleimide, sulfur, etc.

Although there is no particular limitation on the amount of the crosslinking agent added, it is preferably from 0.1 to 20 parts by weight, more preferably from 0.2 to 10 parts by weight, and particularly preferably from 0.3 to 5 parts by weight, based on 100 parts by weight of the crosslinkable crystalline thermoplastic resin. When the amount of the crosslinking agent added is less than 0.1 part by weight, the resulting thermally expandable material is deteriorated in the heat resistance and decreased in the amount of expansion. Conversely, when it exceeds 20 parts by weight, the resulting thermally expandable material becomes hard and brittle.

Besides, a so-called silane crosslinking agent can also be used.

On the other hand, as the ionizing radiation, there can be used an electron beam, a γ ray, an X-ray, a neutron or the like. However, the electron beam is most preferably used in terms of handling properties. Irradiation conditions are appropriately set depending on the kind of crosslinkable crystalline thermoplastic resin.

Further, the chemical crosslinking may be used in combination with the ionizing radiation crosslinking. For example, after crosslinking by use of the chemical crosslinking agent, the composition may be irradiated with the ionizing radiation.

In the second invention, the above-mentioned foam composition is required to be foamed. Although there is no limitation on the foaming means, for example, the chemical foaming agent which generates a gas by heating may be added. The chemical foaming agents include, for example, organic foaming agents such as a sulfonylhydrazide (for example, p,p'-oxybis(benzenesulfonylhydrazide) (OBSH), benzenesulfonylhydrazide or toluenesulfonylhydrazide), an azo compound (for example, azodicarbonamide (ADCA) or azobisisobutyronitrile) and a nitroso compound (for example, N,N'-dinitrosopentamethylenetetramine or N,N'-dimethyl-N,N'--dinitrosoterephthalamide); and inorganic foaming agents such as sodium bicarbonate and ammonium bicarbonate. Of these, BOSH, ADCA or a foaming agent in which they are used in combination is preferred.

The amount of the chemical foaming agent added is preferably from 1 to 40 parts by weight, and more preferably from 3 to 20 parts by weight, based on 100 parts by weight of the crosslinkable crystalline thermoplastic resin. When the amount of the chemical foaming agent added is less than 1 part by weight, it is difficult to obtain a foam having a necessary expansion ratio. When it exceeds 40 parts by weight, over foaming becomes liable to occur.

In order to lower the decomposition temperature (foaming temperature) of the foaming agent, a compound having a catalytic function can be used in combination, and it is necessary to adjust so as to achieve a balance between the crosslinking temperature and the decomposition temperature of the foaming agent. When ADCA is used as the chemical foaming agent, the use of a metal oxide such as zinc oxide, a metal salt of a fatty acid such as zinc stearate or a foaming auxiliary agent such as urea can decrease the decomposition temperature of the foaming agent.

Further, a physical foaming agent can also be used without using the chemical foaming agent. The physical foaming agents include, for example, inorganic agents such as nitrogen and air, and organic agents such as pentane, hexane, dichloroethane, methylene chloride and chlorofluorocarbon gas. As a method using no foaming agent, water in the crosslinked crystalline thermoplastic resin can be vaporized by irradiation of microwaves to foam the composition. Further, the crosslinked crystalline thermoplastic resin may be dissolved or dispersed in an appropriate medium, bubbled by mechanical stirring or blowing of a gas, and gelled to carry out crosslinking. However, in the second invention, foaming with the chemical foaming agent is a preferred foaming method, because it is possible to carry out crosslinking and foaming at the same time, the production process is simplified, and further, the raw materials are easily available.

In order to obtain the thermally expandable material of the second invention, the above-mentioned foam composition is first formed to a specified shape, and foamed to obtain a foam. The forming apparatus include a press, an extruder and calender roll, but the second invention should not be construed as being limited by the kind of forming apparatus. Further, in heating, a hot-air heating furnace, a glass beads fluidized bed, a molten salt tank, a hot press, a high-frequency heater or the like can be used. It is also possible to use them in combination. The heating temperature is preferably from 150 to 250°C, and more preferably from 170 to 220°C. When the heating temperature is lower than 150°C, a long period of time is required for crosslinking and foaming. On the other hand, when the temperature is higher than 250°C, the foam composition deteriorates in some cases.

When the chemical crosslinking is carried out, crosslinking concurrently occurs by heating at this time. When a chemical foaming agent is used as the foaming agent, the foam composition is also similarly foamed by heating. Accordingly, when the crosslinking agent and the chemical foaming agent are used together, crosslinking and foaming occur at the same time by heating. This is therefore preferred as a method for preparing the crosslinked foam in the second invention. When the radiation crosslinking is carried out, a non-foamed formed body is irradiated with the ionizing radiation to crosslink a surface layer thereof, then heated at a temperature equal to or higher than the decomposition temperature of the foaming agent to foam it, and further irradiated with the ionizing radiation to prepare a crosslinked foam.

The bulk density of the foam after crosslinking and foaming is preferably from 10 kg/m³ to less than 1,000 kg/m³, more preferably from 20 kg/m³ to less than 500 kg/m³, and particularly preferably from 50 kg/m³ to less than 300 kg/m³. When the bulk density exceeds 1,000 kg/m³, it becomes difficult to compress the foam, and the difference in thickness between before and after thermal expansion is small, which makes it difficult to sufficiently block the gap. Further, the foam becomes hard to pose a problem with regard to the shape-retaining properties. On the other hand, when the bulk density is less than 10 kg/m³, the strength of the foam is decreased, and the foam becomes too soft, resulting in insufficient thermal expansion properties.

Further, the expansion ratio of the foam can be set by the amount of the foaming agent added, when the chemical foaming agent is used. When the amount of the chemical foaming agent is increased, the expansion ration becomes high. On the other hand, when it is decreased, the expansion ratio becomes low. Furthermore, the expansion ratio can also be set by the viscosity of the foam composition in a non-foamed state. Lowered viscosity results in high expansion ratio, whereas elevated viscosity results in low expansion ratio. Accordingly, the amount of the foaming agent added or the viscosity of the foam composition in a non-foamed state is properly adjusted.

As the preparation of this foam, there is available a normal pressure foaming method of heating the non-foamed formed body with a heating furnace or a conveyer type furnace to induce the crosslinking reaction of the resin and the decomposition reaction of the foaming agent, thereby melt foaming the formed body, a method of irradiating the non-foamed formed body with the ionizing radiation to crosslink the raw material resin, and then, foaming the formed body with a foaming heating furnace, or an extrusion foaming method of decomposing the foaming agent contained in the foam composition in a cylinder of an extruder, and foaming the resin at the same time that it is formed by extrusion. In the extrusion method, an injection molding machine may be used. A one-step pressure foaming method is also available in which the non-foamed foam is placed in a tapered mold, and heated under pressure to proceed with the crosslinking reaction and the decomposition reaction of the foaming agent, followed by pressure removal for expansion at a breath. Further, a two-step foaming method is also available in which the non-foamed foam is placed in a mold, and heated under pressure to proceed with only the crosslinking reaction or the crosslinking reaction and the decomposition reaction of the foaming agent to some degree as the first step, and then, heated in the same mold or a mold increased in volume under normal pressure to complete the crosslinking reaction and the decomposition reaction of the foaming agent as the second step. The second step of this two-step foaming method may be conducted in a foaming heating furnace under normal pressure. Alternatively, a method is also available in which resin beads are previously impregnated with the foaming agent to prepare foamable beads, and the beads placed in a mold are heated by water vapor to adhere the foam to the individual beads by fusion. Furthermore, a method is also available in which a liquid material (a monomer or an oligomer) is poured into a mold while reacting it in the air, followed by foaming. As described above, the foam can be produced by known techniques.

Then, the above-mentioned foam is heated and compressed so as to give a specified thickness. After keeping for a specified period of time, it is cooled to room temperature, as it is kept in the compressed state. In order to obtain the excellent respective performances of fluid sealing, soundproofing and heat insulation at a treated site, the amount of compression is preferably half or less of the thickness of the foam before compression.

In the above-mentioned sequence of compressing operations, for example, the foam may be compressed by heating with a hot press, and cooled in the compressed state. Further, the foam may be heated in a hot-air heating furnace, compressed with a press immediately after it has been taken out of the hot-air heating furnace, and cooled. In order to compress the foam, a weight may be placed thereon without using the press. Further, for continuous production, the foam may be compressed by heating with a hot roll, using a calender roll, and cooled with a cold roll as it is compressed. Furthermore, when crosslinking or foaming is carried out by heating, the foam may be compressed and cooled with a cold roll immediately after it has been heated utilizing heating in crosslinking or foaming. The compressing operations are not limited thereto, and any method can be employed, as long as the preliminary formed body comprising the above-mentioned foam composition can be compressed by heating and cooled in the compressed state. Further, the foam may be cooled before the temperature of the foam crosslinked and foamed by heating falls, without conducting the heating operation after the preparation of the foam.

The heating temperature in the above-mentioned sequence of compressing operations is a temperature equal to or higher than a melting point of the crosslinked crystalline thermoplastic resin, preferably within the range of 80 to 200°C, and the cooling temperature is a temperature less than the melting point of the crosslinked crystalline thermoplastic resin, preferably within the range of 25 to less than 80°C.

The thermally expandable material can take any shape after compression. For example, when the formed body is compressed with a flat plate, a sheet-like thermally expandable material is obtained. When the formed body is compressed with a plate having any shape such as embossing, the shape is transferred to the thermally expandable material. Further, a site to be compressed may be any, and either the whole surface or only a part of the formed body may be compressed.

Then, after cooling, the pressure is released to obtain the thermally expandable material of the second invention. The thermally expandable material of the second invention thus obtained has the thermal expansion properties that the compressed state is maintained at room temperature, and released by heating to expand. Accordingly, the thermally expandable material of the second invention has respective mechanisms for the shape-retaining properties and the thermal expansion properties. Although the second invention is not limited by a specific theory, the inventors presume that the shape-retaining properties and the thermal expansion properties are developed by the following mechanisms.

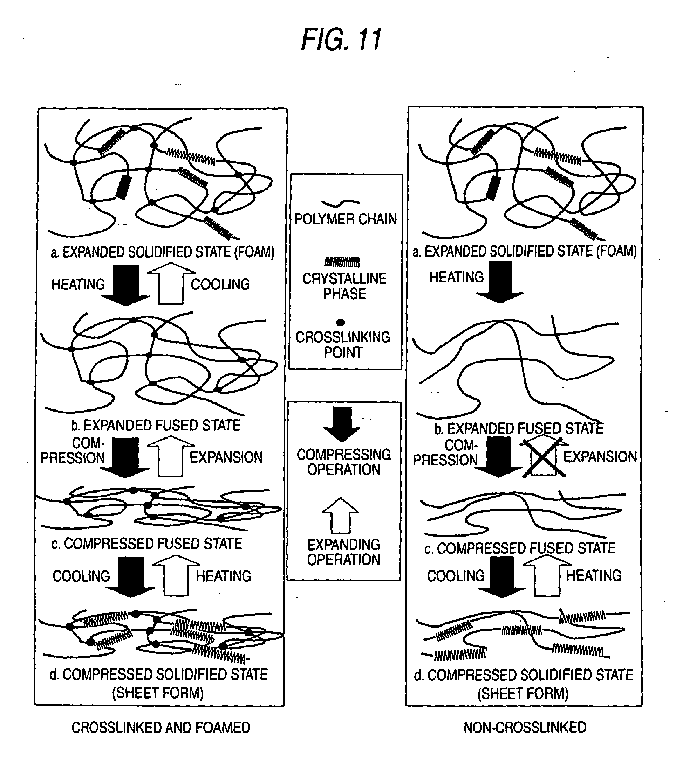

As shown in the left column of Fig. 11, in the foam according to the crosslinked crystalline thermoplastic resin, a polymer chain is partially crosslinked, so that the polymer chain is not completely disentangled due to crosslinking points even when a crystalline phase is fused at a temperature equal to or higher than the melting temperature. Accordingly, the force of restoring the thickness acts by the elasticity (a → b). On the other hand, the foam is softened by fusion of the crystalline phase due to heating to decrease rigidity. In such a state, it is possible to deform the foam by a low stress. Further, the foam is cooled in a deformed state to form a hardened product, thereby increasing rigidity, which makes it possible to keep the deformed shape. Accordingly, when the foam according to the crosslinked crystalline thermoplastic resin is cooled as it is compressed by heating, the foam tends to restore the thickness by its elastic restoring force due to crosslinking. However, the compressed state is maintained by the crystalline phase of the hardened thermoplastic resin to develop the shape-retaining properties (b → c). In order to develop the shape-retaining properties, a shape-retaining force higher than the restoring force is required.

The thermally expandable material shape-retained in the above-mentioned compressed state has a shape-retaining force higher than the restoring force at room temperature. Accordingly, when the restoring force exceeds the shape-retaining force, the thermal expansion restoring properties based on the restoring force is developed. For that purpose, it becomes an effective means to decrease the shape-retaining force, and in the thermally expandable material of the second invention, the shape-retaining force is decreased by application of heat (c → d). As described above, the thermoplastic resin is softened on heating, and it becomes possible to deform the foam by a low stress. Accordingly, the hardened product of the thermoplastic resin is softened by heating to decrease rigidity, thereby lowering the shape-retaining force. On the other hand, the crosslinkable crystalline thermoplastic resin is crosslinked in the shape of the foam, and the force acts which tends to recover to the shape of the foam by elastic restoration. With heating of the thermally expandable material, the elastic restoring force comes to exceed the shape-retaining force. As a result, the compressed state is released to develop the thermal expansion properties (c → b).

In contrast, the right column of Fig. 11 shows an expanded state in which the crosslinkable crystalline thermoplastic resin is foamed without crosslinking it. At a temperature equal to or higher than the melting temperature at which plastic flow becomes possible, the crystalline phases are fused, and the tangles in the polymer chain are disentangled, as shown in (a → b). Accordingly, even when the foam is compressed in a state in which the polymer chain is disentangled, it has no force which tends to recover to the original shape (shape-retaining properties), as shown in (b → c). Further, the thermoplastic resin is solidified to a sheet form by cooling it as it is compressed, as shown in (c → d). However, even when the foam is heated at a temperature equal to or higher than the melting temperature from the compressed state to fuse the crosslinkable crystalline thermoplastic resin again, it can not expand because it has no shape-restoring force, as shown in (c → b).

The mechanisms for developing the shape-retaining properties and the thermal expansion properties of the thermally expandable material of the first invention are as described above.

In the second invention, the crystalline thermoplastic resin is used. However, according to an amorphous thermoplastic resin, rapid thermal expansion at a specific temperature does not occur. The inventors consider the reason for this as follows.

When the thermoplastic resin is higher in rigidity at a temperature around room temperature at which the shape-retaining properties are developed, and lower in thermal expansion at a high temperature at which the thermal expansion properties are developed, the thermally expandable material good in both the shape-retaining properties and the thermal expansion properties is obtained. The thermoplastic resin gradually decreased in rigidity with a rise in temperature is very slowly restored in a temperature region in which the rigidity is decreased, so tat the resin can not block the gap immediately, and it is also difficult to store the resin in the compressed state. As the thermoplastic resin, one rapidly decreased in rigidity at a specific temperature to be fluidized is preferred, because the storable temperature region in which the shape-retaining properties are developed and the thermally expandable temperature region in which the gap can be immediately blocked are widened. The thermoplastic resins include a crystalline resin and an amorphous resin. The crystalline thermoplastic resin is rapidly softened in a temperature region equal to or higher than the melting point thereof, and mostly fluidized. In contrast, the amorphous resin is softened at a temperature equal to or higher than the glass transition temperature thereof, but rapid softening as observed in the crystalline thermoplastic resin does not occur. Accordingly, the crystalline thermoplastic resin is preferred as the thermoplastic resin of the second invention. The amorphous resin such as an acrylic resin or polystyrene cannot provide the thermally expandable material excellent in both the shape-retaining properties and the thermal expansion properties, and shows the behavior of slowly expanding in a wide temperature region. It becomes therefore impossible to block the gap immediately by heating, and a problem is practically encountered as the thermally expandable material.

The reason why it is presumed that the thermally expandable material which rapidly thermally expands at a specific temperature is obtained by using the crystalline thermoplastic resin is as described above. However, the second invention should not be construed as being limited to this theory.

Heating for thermal expansion in the above can be conducted, for example, by a method of pressing a hot plate heated at a specified temperature to the thermally expandable material or blowing a hot air thereto. The heating temperature at that time can be appropriately set according to the melting point of the thermoplastic resin. The lower the melting point of the thermoplastic resin is, the lower temperature is required for thermal expansion. For example, an ethylene-vinyl acetate copolymer having a melting point of about 50°C to about 100°C depending on the copolymerization ratio of ethylene and vinyl acetate which are monomer units is commercially available, and the copolymer having an appropriate melting point can be selected. Further, when thermal expansion at a higher temperature is desired, for example, polyethylene terephthalate having a melting point of about 250°C or the like can be used.

The above-mentioned thermally expandable material according to the second invention can be used for fluid sealing of joints, soundproofing and heat insulation in architectural structures, industrial instruments and automobiles, similarly to a conventional material. As described above, the foam material is usually mounted in the compressed state onto a site to be treated, and the joint gap is filled in with the foam material by shape recovery due to the elastic force of the foam material itself. However, the conventional foam material is restored momentarily when the pressure is released. It is therefore necessary to mount the foam material onto the site to be treated while keeping a state withstanding the restoring force of the foam material in the compressed state. Accordingly, workability for mounting the foam material is extremely deteriorated. When the foam material is made thin, the workability for mounting the foam material is improved. However, the respective performances of fluid sealing, soundproofing and heat insulation become insufficient because of the development of the gap. Further, a soft foam material is used to reduce the restoring force of the foam material in the compressed state, thereby being able to improve the workability to some degree. However, the effect thereof is slight, and the performance of fluid sealing is rather deteriorated.

In contrast, according to the thermally expandable material of the second invention, the shape is retained in the compressed state, so that the thermally expandable material can be extremely easily mounted onto the site to be treated. Further, the thermally expandable material of the first invention expands in a sponge form by heating to fill in the gap, so that the respective performances of fluid sealing, soundproofing and heat insulation are sufficiently exhibited. Further, when the thermally expandable material is used in a machine which generates heat by its operation, such as an industrial instrument or an automobile described later, it expands in a sponge form by the heat generated by the operation of the machine. Accordingly, the procedure of applying heat becomes unnecessary in some cases. The invention further provides a soundproof cover for an automobile engine using the above-mentioned thermally expandable material, and an embodiment thereof will be shown below.

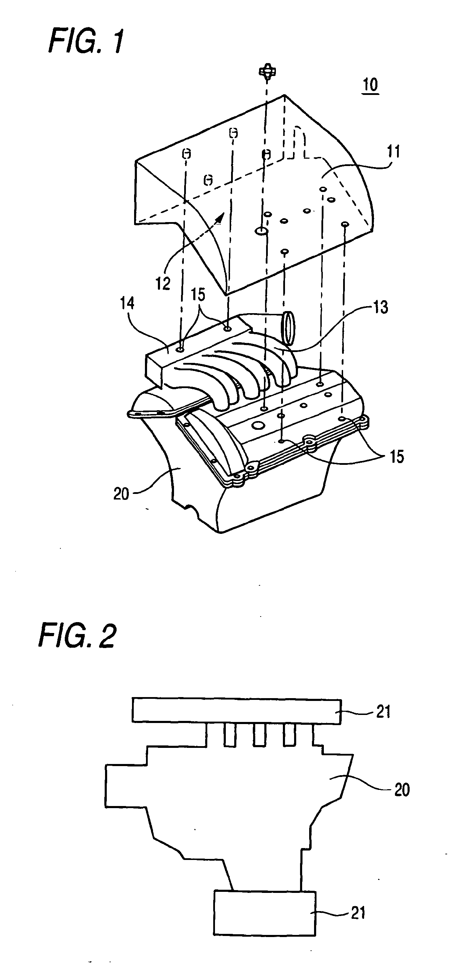

Fig. 1 is a perspective view showing an embodiment of an engine soundproof cover 10 used in a V type engine 20. This engine soundproof cover 10 comprises a cover body 11 made of a metal or a resin and a foam material 12 provided as a soundproof on almost the whole of a face on the engine side of the cover body 11 (inner surface), and fixed with bolts (not shown) to fastening holes 15 formed in an intake manifold 13, an intake collector 14 or the like. The shape of an engine 20 is complicated, so that the foam material 12 has hitherto been mounted onto the engine 20 in a state in which the foam material is compressed in its thickness direction, and restored in the thickness by the elastic force of the foam material 12 itself, thereby filling in a gap between the cover body 11 and the engine 20 to enhance the soundproofing effect. However, the foam material 12 is restored momentarily when the pressure is released. It is therefore necessary to attach the engine soundproof cover 10 to the engine 20 with the foam material 12 in the compressed state withstanding the restoring force thereof. Accordingly, workability for mounting the foam material is extremely deteriorated.

When the foam material 12 is made thin, the workability for mounting the foam material is improved. However, the soundproofing performance becomes insufficient because of the development of a gap between the foam material and the engine 20. Further, the restoring force from the compressed state can be reduced by using a soft foam material 12, but the effect thereof is slight, rather resulting in a decrease in the strength of the foam material 12, which causes a disadvantage such as shortened life. Further; the foam material 12 may be formed to the shape of the engine 20. However, the foam material 12 must be prepared for every type of the engine 20, further, for every portion to be mounted when the foam materials are mounted to a plurality of portions of the engine 20, which causes an increase in production cost. Moreover, the foam material 12 is not in abutting contact with the engine 20 by pressure, so that a gap is inevitably developed between the foam material 12 and the engine 20 although it is slight. This is also a problem with regard to the soundproofing performance.

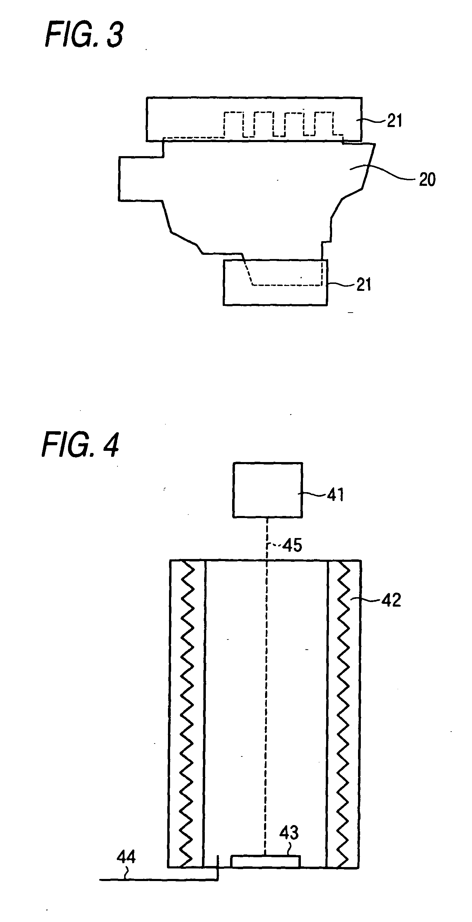

Then, the thermally expandable material of the invention is used in place of the foam material 12. As shown in Fig. 2 (only the engine 20 and the thermally expandable material 21 are shown for brevity), the thermally expandable material 21 is maintained in a state in which it is compressed in its thickness direction, and can be mounted onto the engine 20 without withstanding the restoring force of the foam material in the compressed state such as the conventional foam material. In this state, a gap exists between the engine 20 and the thermally expandable material 21 as shown in the drawing. Then, as shown in Fig. 3, when the thermally expandable material 21 in the compressed state is heated at a specified temperature, the thermally expandable material 21 expands in the thickness direction to fill in the above-mentioned gap, thereby obtaining a closely joined state. As described above, by using the thermally expandable material of the invention, not only it is easily mounted onto the engine 20, but also the soundproofing performance is improved.

There is no particular limitation on the heating method for shape restoration, and a method of pressing a hot plate heated at a specified temperature to the cover body 11 or blowing a hot air thereto with a dryer can be employed. In an ordinary automobile, the temperature in an automotive hood is elevated to about 80°C by idling running in many cases. Of the thermally expandable materials, some materials are restored in shape at a temperature equal to or lower than the above-mentioned temperature, for example, at about 75°C. In that case, only idling running of the engine 20 is required without particularly conducting a heating operation, which can reduce manpower for mounting.

### EXAMPLES

The present invention will be illustrated in greater detail with reference to the following Examples and Comparative Examples, but the invention should not be construed as being limited thereto.

### Example 1A

Based on 100 parts by weight of an ethylene-propylene-diene copolymer rubber which is a crosslinkable polymer material, 10 parts by weight of an ethylene-vinyl acetate copolymer which is a crystalline thermoplastic resin (b) having oxygen in its molecule and various additives were mixed in the formulation shown in Table 1A by use of a rubber kneading roll to obtain a foam composition. Then, this foam composition was formed at 80°C to a size of 150 X 150 X 2 mm as it was non-crosslinked, using a hot press, and the resulting formed product was heated with a hot-air heating furnace at 180°C for 10 minutes to obtain a foam. The bulk density of the foam was 90 kg/m³. Then, this foam was heated with a hot-air heating furnace at 120°C for 10 minutes, held between iron plates kept at room temperature together with 2-mm spacers immediately after it had been taken out, and allowed to stand as it was for 10 minutes, thereby cooling it to room temperature to obtain a thermally expandable material. The thermally expandable material was stamped out to a disk form having a diameter of 30 mm to form a test piece.

The thickness of the resulting test piece during heating was measured using a thickness measuring device shown in Fig. 4. In the device shown in Fig. 4, a test piece 43 is placed on a bottom of a cylindrical furnace 42 having a diameter of 50 mm and a length of 200 mm, the test piece 43 is irradiated with a laser beam 45 from a laser displacement gauge 41 disposed above an upper opening of the cylindrical furnace 42, and the thickness of the test piece 43 is measured from a reflected light at that time. In Fig. 4, the reference numeral 44 indicates a thermocouple for measuring the temperature in the furnace. Measurements were made at a rate of temperature rise of 1 °C/min at temperatures ranging from room temperature to 125°C.

### Example 2A

A test piece was prepared in the same manner as in Example 1A with the exception that 20 parts by weight of the ethylene-vinyl acetate copolymer was used. The bulk density of a foam before compression was 80 kg/m³. The thickness of the test piece during heating was measured in the same manner as in Example 1A.

### Example 3A

A test piece was prepared in the same manner as in Example 1A with the exception that 50 parts by weight of the ethylene-vinyl acetate copolymer was used. The bulk density of a foam before compression was 200 kg/m³. The thickness of the test piece during heating was measured in the same manner as in Example 1A.

### Example 4A

A test piece was prepared in the same manner as in Example 1A with the exception that 100 parts by weight of the ethylene-vinyl acetate copolymer was used. The bulk density of a foam before compression was 210 kg/m³. The thickness of the test piece during heating was measured in the same manner as in Example 1A.

### Example 5A

A test piece was prepared in the same manner as in Example 1A with the exception that an ethylene-acrylic acid copolymer which is also a crystalline thermoplastic resin (b) having oxygen in its molecule was used in place of the ethylene-vinyl acetate copolymer in Example 2A. The bulk density of a foam before compression was 90 kg/m³. The thickness of the test piece during heating was measured in the same manner as in Example 1A.

### Example 6A

A test piece was prepared in the same manner as in Example 1A with the exceptions that a nitrile rubber which is also a crosslinkable polymer material was used in place of the ethylene-propylene-diene copolymer rubber in Example 3A, an ester oil having compatibility with the nitrile rubber was used in place the paraffin oil, and 100 parts by weight of the ethylene-vinyl acetate copolymer which is a crystalline thermoplastic resin (b) having oxygen in its molecule was used, based on 100 parts by weight of the crosslinkable polymer material. The bulk density of a foam before compression was 340 kg/m³. The thickness of the test piece during heating (from room temperature to 170°C) was measured in the same manner as in Example 1A.

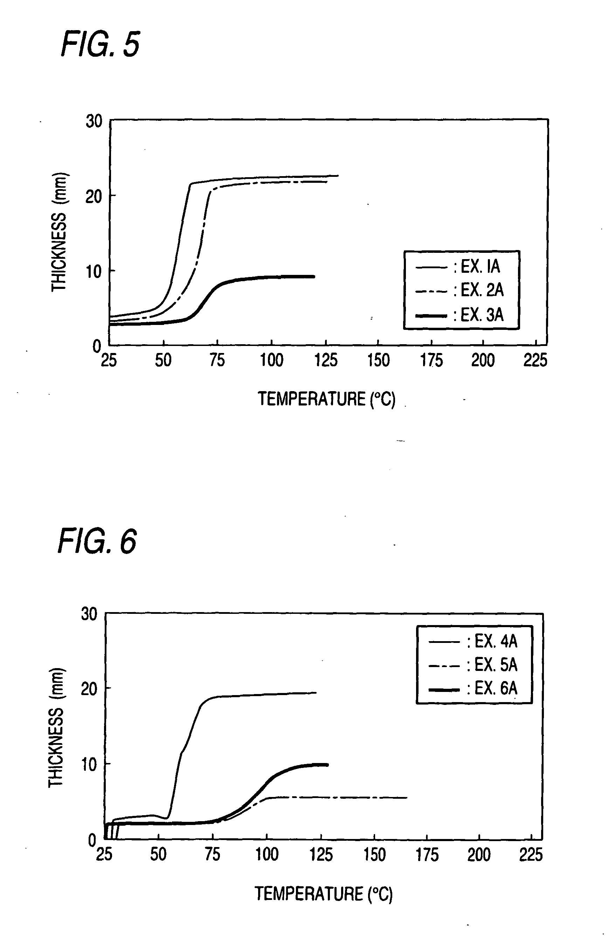

Compositions of the foam compositions of Examples 1A to 6A described above are collectively shown in Table 1A. The results of thickness measurements on the test pieces of Examples 1A to 3A are shown in Fig. 5, and the results of thickness measurements on the test pieces of Examples 4A to 6A are shown in Fig. 6.

**Table 1A**

| | Example 1A | Example 2A | Example 3A | Example 4A | Example 5A | Example 6A |
|---|---|---|---|---|---|---|
| EPDM | 100 | 100 | 100 | 100 | 100 | |
| NBR | | | | | | 100 |
| EVA | 10 | 20 | 50 | 100 | | 100 |
| EEA | | | | | 20 | |
| Paraffinic Oil | 50 | 50 | 50 | 50 | 50 | |
| Ester-Based Oil | | | | | | 50 |
| ZnO | 5 | 5 | 5 | 5 | 5 | 5 |
| Stearic Acid | 1 | 1 | 1 | 1 | 1 | 1 |
| Sulfur | 1.5 | 1.5 | 1.5 | 1.5 | 1.5 | 1.5 |
| TMTD | 3 | 3 | 3 | 3 | 3 | 3 |
| MBT | 1.5 | 1.5 | 1.5 | 1.5 | 1.5 | 1.5 |
| ADCA + Auxiliary agent | 16 | 17 | 20 | 25 | 25 | 17 |
| EPDM: An ethylene-propylene-diene copolymer rubber, EP33 manufactured by JSR Corporation, Mooney viscosity: 45 (@ 100°C), kind of diene: ethylidenenorbornene, ethylene content: 52% | | | | | | |
| NBR: A nitrile rubber, Nipol DN3335 manufactured by ZEON Corporation, Mooney viscosity: 35 (@ 100°C), acrylonitrile content: 33% | | | | | | |
| EVA: An ethylene-vinyl acetate copolymer, Ultrathene 633 manufactured by Tosoh Corporation, specific gravity: 0.94, melt flow rate: 20 g/10 min, melting point: 83°C, Vicat softening temperature: 51°C | | | | | | |
| EEA: An ethylene-acrylic acid copolymer, NUC Copolymer NDPJ-9169 manufactured by Nippon Unicar Co., Ltd., specific gravity: 0.93, melt flow rate: 20 g/10 min, melting point: 90°C, Vicat softening temperature: 50°C | | | | | | |
| Paraffinic Oil: A paraffinic oil, Syntack PA100 manufactured by Kobe Oil Chemical Industrial Co., Ltd., specific gravity: 0.8832, viscosity: 73.89/s (@ 40°C) | | | | | | |
| Ester-Based Oil: Di(butoxyethoxyethyl) adipate, TP95 manufactured by Rohm & Haas Company | | | | | | |
| TMTD: A crosslinking accelerator, tetramethylthiuram disulfide | | | | | | |
| MBT: A crosslinking accelerator, 2-mercaptobenzothiazole | | | | | | |
| ADCA + Auxiliary Agent: A foaming agent, Cellmic CAP250 manufactured by Sankyo Chemical Co., Ltd., a mixture of azodicarbonamide and urea | | | | | | |

### Comparative Example 1A

A test piece was prepared in the same manner as in Example 1A with the exception that 400 parts by weight of the ethylene-vinyl acetate copolymer was used. The bulk density of a foam before compression was 160 kg/m³. The thickness of the test piece during heating was measured in the same manner as in Example 1A.

### Comparative Example 2A

A test piece was prepared in the same manner as in Example 2A with the exception that polyethylene which is a crystalline thermoplastic resin having no oxygen in its molecule was used in place of the ethylene-vinyl acetate copolymer. The bulk density of a foam before compression was 90 kg/m³. The thickness of the test piece during heating (from room temperature to 150°C) was measured in the same manner as in Example 1A.

### Comparative Example 3A

A test piece was prepared in the same manner as in Example 2A with the exceptions that polypropylene which is a crystalline thermoplastic resin having no oxygen in its molecule was used in place of the ethylene-vinyl acetate copolymer, and the heating temperature before compression was 180°C. The bulk density of a foam before compression was 150 kg/m³. The thickness of the test piece during heating (from room temperature to 230°C) was measured in the same manner as in Example 1A.

### Comparative Example 4A

A test piece was prepared in the same manner as in Example 2A with the exception that an acrylic resin which is an amorphous thermoplastic resin having oxygen in its molecule was used in place of the ethylene-vinyl acetate copolymer. The bulk density of a foam before compression was 70 kg/m³. The thickness of the test piece during heating (from room temperature to 150°C) was measured in the same manner as in Example 1A.

### Comparative Example 5A

A test piece was prepared in the same manner as in Example 1A with the exception that the ethylene-vinyl acetate copolymer was not used. The bulk density of a foam before compression was 90 kg/m³. The thickness of the test piece during heating was measured in the same manner as in Example 1A.

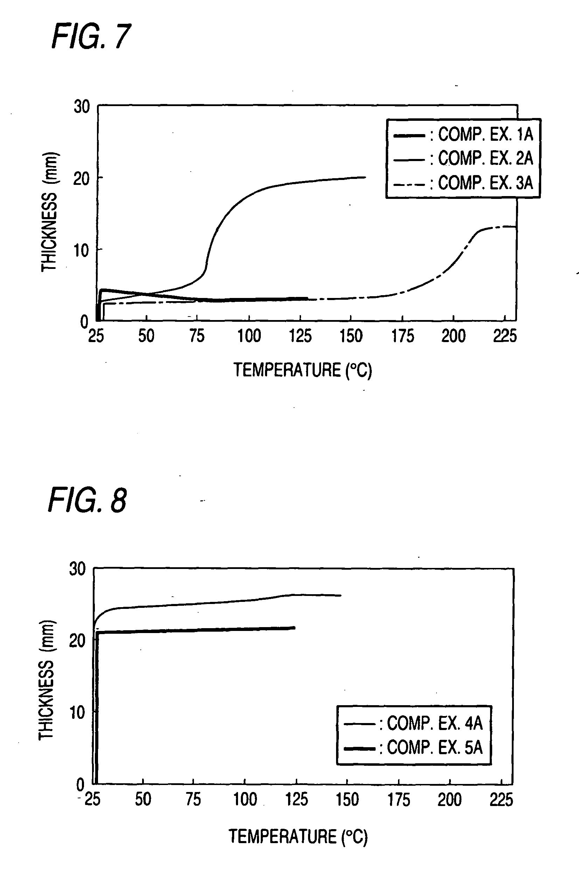

Compositions of the foam compositions of Comparative Examples 1A to 5A described above are collectively shown in Table 2A. The results of thickness measurements on the test pieces of Comparative Examples 1A to 3A are shown in Fig. 7, and the results of thickness measurements on the test pieces of Comparative Examples 4A and 5A are shown in Fig. 8.

**Table 2A**

| | Comp. Ex. 1A | Comp. Ex. 2A | Comp. Ex. 3A | Comp. Ex. 4A | Comp. Ex. 5A |
|---|---|---|---|---|---|
| EPDM | 100 | 100 | 100 | 100 | 100 |
| EVA | 400 | | | | |
| LDPE | | 20 | | | |
| PP | | | 20 | | |
| PMMA | | | | 20 | |
| Paraffinic Oil | 50 | 50 | 50 | 50 | 50 |
| ZnO | 5 | 5 | 5 | 5 | 5 |
| Stearic Acid | 1 | 1 | 1 | 1 | 1 |
| Sulfur | 1.5 | 1.5 | 1.5 | 1.5 | 1.5 |
| TMTD | 3 | 3 | 3 | 3 | 3 |
| MBT | 1.5 | 1.5 | 1.5 | 1.5 | 1.5 |
| ADCA + Auxiliary agent | 55 | 17 | 17 | 17 | 15 |

| | | | | | |
|---|---|---|---|---|---|
| EPDM: An ethylene-propylene-diene copolymer rubber, EP33 manufactured by JSR Corporation, Mooney viscosity: 45 (@ 100°C), kind of diene: ethylidenenorbornene, ethylene content: 52% EVA: An ethylene-vinyl acetate copolymer, Ultrathene 633 manufactured by Tosoh Corporation, specific gravity: 0.94, melt flow rate: 20 g/10 min, melting point: 83°C, Vicat softening temperature: 51°C LDPE: Polyethylene, LF561M manufactured by Nippon Polychem Corp., specific gravity: 0.93, melt flow rate: 4.0 g/10 min, melting point: 115°C, Vicat softening temperature: 100°C PP: Polypropylene, Grand Polypro J105WT manufactured by Grand Polymer Co., Ltd., specific gravity: 0.91, melt flow rate: 15 g/10 min, melting point: 160°C, Vicat softening temperature: 150°C PMMA: An acrylic resin, Acrypet MD001 manufactured by Mitsubishi Rayon Co., Ltd., specific gravity: 1.19, melt flow rate: 6.0 g/10 min, Vicat softening temperature: 94°C Paraffinic Oil: A paraffinic oil, Syntack PA100 manufactured by Kobe Oil Chemical Industrial Co., Ltd., specific gravity: 0.8832, viscosity: 73.89/s (@ 40°C) TMTD: A crosslinking accelerator, tetramethylthiuram disulfide MBT: A crosslinking accelerator, 2-mercaptobenzothiazole ADCA + Auxiliary Agent: A foaming agent, Cellmic CAP250 manufactured by Sankyo Chemical Co., Ltd., a mixture of azodicarbonamide (ADCA) and urea | | | | | |

As is apparent from Figs, 5 and 6, the test pieces of Examples 1A to 6A according to the first invention exhibit the ideal behavior of keeping an approximately constant thickness up to a specific temperature, rapidly increasing the thickness at the specific temperature, and giving a constant thickness after an increase in thickness. Specifically, the thickness rapidly increases in temperature regions of 40 to 60°C (temperature difference: 20°C) for Example 1A, 45 to 70°C (temperature difference: 25°C) for Example 2A, 60 to 70°C (temperature difference: 10°C) for Example 3A, 80 to 110°C (temperature difference: 30°C) for Example 4A, 50 to 65°C (temperature difference: 15°C) for Example 5A, and 80 to 100°C (temperature difference: 20°C) for Example 6A. Examples 1A to 5A, in which the amount of the crystalline thermoplastic resin (b) having oxygen in its molecule added is varied, show that the heating expansion temperature of the thermally expandable material can be controlled by the amount of the thermoplastic resin (b). Further, Example 6A, in which the nitrile rubber is used as the crosslinkable polymer material (a), provides the thermally expandable material, as well as the ethylene-propylene-diene copolymer rubber used in Examples 1A to 5A.

In contrast, the test piece of Comparative Example 1A in which the crystalline thermoplastic resin (b) having oxygen in its molecule is blended in an amount exceeding 300 parts by weight is constant in thickness even when the temperature is elevated, and does not thermally expand. Accordingly, this shows that when the crystalline thermoplastic resin (b) having oxygen in its molecule is blended in an amount exceeding 300 parts by weight, the thermally expandable material is not obtained. The test piece of Comparative Example 2A using polyethylene which is a crystalline resin having no oxygen in its molecule in place of the crystalline thermoplastic resin (b) having oxygen in its molecule increases in thickness in a temperature region as wide as 50 to 125°C (temperature difference: 75°C), and a rapid increase in thickness by heating is not observed. This shows that polyethylene which is a crystalline resin having no oxygen in its molecule is unsuitable for the thermally expandable material. Further, the test piece of Comparative Example 3A using polypropylene which is also a crystalline resin having no oxygen in its molecule also increases in thickness in a temperature region as wide as 170 to 215°C (temperature difference: 45°C), so that this shows that polypropylene is unsuitable for the thermally expandable material. Furthermore, the test piece of Comparative Example 4A using the acrylic resin which is an amorphous resin having oxygen in its molecule in place of the crystalline thermoplastic resin (b) having oxygen in its molecule almost terminates expansion immediately after pressure release, and thereafter only slightly expands with a rise in temperature, not showing the behavior of rapid expansion at a specific temperature. Accordingly, this shows that the acrylic resin which is an amorphous resin is unsuitable for the thermally expandable material. The test piece of Comparative Example 5A not using the crystalline thermoplastic resin (b) having oxygen in its molecule is restored immediately after pressure release after compression, and can not sufficiently retain the shape, which shows that it is unsuitable for the thermally expandable material.

From the above, it has been confirmed that the thermally expandable material of the first invention is required to use the foam composition containing 5 to 300 parts by weight of the crystalline thermoplastic resin (b) having oxygen in its molecule, based on 100 parts by weight of the crosslinkable polymer material (a).

### Example 1B

Based on 100 parts by weight of an ethylene-vinyl acetate copolymer which is a crosslinkable crystalline thermoplastic resin, various additives were mixed in the formulation shown in Table 1B by use of an enclosed type kneader to obtain a kneaded product. The melting point of the ethylene-vinyl acetate copolymer used herein was 90°C.

Then, this kneaded product was formed at 100°C to a size of 100 X 100 X 2 (thickness) mm as it was non-crosslinked, using a hot press, and the resulting formed product was stamped out to a circular form having a diameter of 27 mm. The resulting product was placed in a mold of 29 mm (diameter) X 12.5 mm, and heated with a hot press at 180°C for 10 minutes to obtain a crosslinked foam. The bulk density of the crosslinked foam was 160 kg/m³.

Then, this crosslinked foam was heated with a hot-air heating furnace at 120°C for 10 minutes, held between iron plates kept at room temperature together with 2-mm spacers immediately after it had been taken out, allowed to stand as it was for 10 minutes, thereby cooling it to room temperature to obtain a test piece.

Then, the test piece 43 was placed on a bottom of a cylindrical furnace 42 having a diameter of 50 mm and a length of 200 mm shown in Fig. 4, and heated at a rate of temperature rise of 1 °C/min at temperatures ranging from room temperature to 140°C. The test piece 43 during heating was irradiated with a laser beam 45 from a laser displacement system 41 to measure the thickness. In Fig. 4, the reference numeral 44 indicates a thermocouple.

### Example 2B

A test piece was prepared in the same manner as in Example 1B with the exception that an ethylene-vinyl acetate copolymer having a melting point of 102°C was used in place of the ethylene-vinyl acetate copolymer having a melting point of 90°C, and the thickness thereof during heating was similarly measured. The bulk density of a crosslinked foam before compression was 150 kg/m³. The formulation thereof is shown in Table 1B.

### Comparative Example 1B

In the formulation of Example 1B, kneading was carried out without adding the crosslinking agent and the crosslinking assistant. The formulation thereof is shown in Table 1B. Then, the resulting kneaded product was formed at 100°C to a size of 100 X 100 X 2 (thickness) mm as it was non-crosslinked, using a hot press, and the resulting formed product was stamped out to a circular form having a diameter of 27 mm. The resulting product was placed in a mold of 29 mm (diameter) X 12.5 mm, heated with a hot press at 180°C for 10 minutes, and cooled to 50°C together with the mold as it was pressurized to obtain a test piece. The bulk density of the crosslinked foam before compression was 180 kg/m³. Then, the thickness of the test piece during heating was measured in the same manner as in Example 1B.

### Comparative Example 2B

The crosslinked foam prepared in Example 1B was heated with a hot-air heating furnace at 50°C, which is a temperature lower than the melting point of the resin, for 10 minutes, held between iron plates kept at room temperature together with 2-mm spacers immediately after it had been taken out, allowed to stand as it was for 10 minutes, thereby cooling it to room temperature to obtain a test piece. The formulation thereof is shown in Table 1B. Then, the thickness of the test piece during heating was measured in the same manner as in Example 1B.

### Comparative Example 3B

The thickness of a test piece during heating was measured in the same manner as in Example 1B with the exception that a commercial urethane foam material was used as a foam. The bulk density of the urethane foam before compression was 25 kg/m³.

**Table 1B**

| | Example 1B | Example 2B | Com. Ex. 1B | Com. Ex. 2B | Com. Ex. 3B |
|---|---|---|---|---|---|
| EVA (melting point: 90°C | 100 | | 100 | 100 | Commercial |
| EVA (melting point: 102°C) | | 100 | | | Urethane |
| Crosslinking Agent | 4.5 | 4.5 | | 4.5 | Form |
| Crosslinking Assistant | 15 | 15 | | 15 | Material |
| ADCA + Auxiliary agent | 20 | 20 | 20 | 20 | |
| EVA (melting point: 90°C): An ethylene-vinyl acetate copolymer, Ultrathene 630 manufactured by Tosoh Corporation, specific gravity: 0.936, melt mass-flow rate: 1.5 g/10 min, melting point: 90°C, Vicat softening temperature: 67°C | | | | | |
| EVA (melting point: 102°C): An ethylene-vinyl acetate copolymer, Ultrathene 513 manufactured by Tosoh Corporation, specific gravity: 0.926, melt mass-flow rate: 1.0 g/10 min, melting point: 102°C, vicat softening temperature: 82°C | | | | | |
| Crosslinking Agent: An organic peroxide, di-t-butyl peroxide | | | | | |
| Crosslinking Assistant: Triallyl isocyanurate | | | | | |
| ADCA + Auxiliary Agent: A foaming agent, Cellmic CAP250 manufactured by Sankyo Chemical Co., Ltd., a mixture of azodicarbonamide and urea | | | | | |

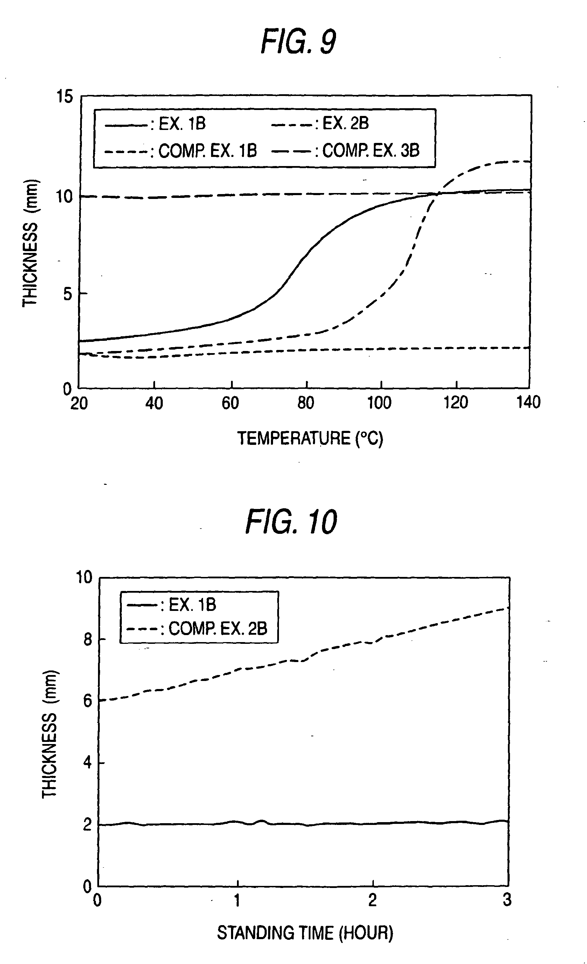

Fig. 9 shows the relationships between the temperature and the thickness of the test pieces of Examples 1B and 2B and Comparative Examples 1B and 3B. The test pieces of Examples 1B and 2B according to the second invention exhibit the ideal behavior of keeping an approximately constant thickness up to a specific temperature, rapidly increasing the thickness at the specific temperature, and giving a constant thickness after an increase in thickness. More particularly, the test piece of Example 1B using the ethylene-vinyl acetate copolymer having a melting point of 90°C thermally expands in a temperature region of 60 to 100°C, and the test piece of Example 2B using the ethylene-vinyl acetate copolymer having a melting point of 102°C thermally expands in a temperature region of 90 to 120°C. This shows that the thermal expansion temperature can be freely set by the melting point of the crystalline thermoplastic resin used.

Further, the test piece of Example 1B crosslinked expanded by heating from the compressed state, but the test piece of Comparative Example 1B not crosslinked did not expand even when heated from the compressed state. This shows that when the resin is not crosslinked, no thermal expansion occurs and no thermally expandable material is obtained.

Furthermore, the test pieces of Examples 1B and 2B using the ethylene-vinyl acetate copolymer which is a crystalline thermoplastic resin had a thickness of 2 mm after pressure release, and expanded by heating. However, in the test piece of Comparative Example 3B using the urethane resin which is a thermosetting resin, the thickness after pressure release returned to the thickness before compression to fail to maintain the compressed state. This shows that the thermosetting resin is unsuitable for the thermally expandable material.

Fig. 10 shows the relationships between the standing time and the thickness of the test pieces of Example 1B and Comparative Example 2B allowed to stand at room temperature. The test piece of Example 1B had a thickness of 2 mm after pressure release, and then was allowed to stand at room temperature. The thickness thereof after standing was kept 2 mm. In contrast, the test piece of Comparative Example 2B had a thickness of 6 mm immediately after pressure release. However, the thickness increased to 9 mm after standing at room temperature for 3 hours. This shows that the compressing operation at a temperature lower than the melting point of the resin makes impossible the storage at room temperature in the compressed state, and is unsuitable for the thermally expandable material.

As described above, according to the invention, there can be provided the thermally expandable material excellent in the respective performances of fluid sealing, soundproofing and heat insulation, and also excellent in the mounting operation to the respective sites to be treated. Further, according to the invention, there can be provided the thermally expandable material made of a resin, easily produced, capable of maintaining the compressed state for a long period of time, large in the amount of expansion by heating, and excellent in the sealing performance and the soundproofing performance. Furthermore, according to the invention, there can be provided the soundproof cover for an automobile engine, which is excellent in the soundproofing performance and mounting performance.

## Claims

1. A method for producing a thermally expandable material, which comprises:
forming, into a predetermined shape, a foam composition comprising:
100 parts by weight of (a) a crosslinkable polymer material; and
5 to 300 parts by weight of (b) a crystalline thermoplastic resin having oxygen in its molecule;
allowing the resulting formed product to undergo crosslinking and foaming;
heating and compressing the resulting foam at a temperature equal to or higher than a melting point of the crystalline thermoplastic resin (b); and
cooling the compressed product to a temperature lower than the melting point of the crystalline thermoplastic resin (b) as it is compressed, wherein the cooled product is expandable by heat from the compressed state.

2. A thermally expandable material obtainable by the method according to claim 1.

3. The thermally expandable material according to claim 2, wherein the crosslinkable polymer material (a) in the foam composition is a rubber.

4. The thermally expandable material according to claim 2 or 3, wherein the crosslinkable polymer material (a) in the foam composition is a rubber crosslinkable with sulfur or a sulfur compound.

5. The thermally expandable material according to any one of claims 2 to 4, wherein the crosslinkable polymer material (a) in the foam composition is an ethylene-propylene-diene copolymer rubber.

6. The thermally expandable material according to any one of claims 2 to 5, wherein the crystalline thermoplastic resin (b) in the foam composition is an ethylene-vinyl acetate copolymer or an ethylene-acrylic acid copolymer.

7. A soundproof cover for an automobile, which comprises a joint material comprising a thermally expandable material according to any one of claims 2 to 6.

8. A method for producing a thermally expandable material, which comprises:
forming, in a predetermined shape, a foam composition comprising a crosslinkable crystalline thermoplastic resin, said resin being an ethylene-vinyl acetate copolymer;
crosslinking and foaming the resulting formed product;
heating and compressing the resulting foam at a temperature equal to or higher than a melting point of the crosslinkable crystalline thermoplastic resin; and
cooling it to a temperature lower than the melting point of the crosslinkable crystalline thermoplastic resin as it is compressed, wherein the cooled product is expandable by heat from the compressed state.

9. A thermally expandable material obtainable by the method according to claim 8.

10. The thermally expandable material according to claim 9, wherein the crystalline thermoplastic resin is crosslinked by ionizing radiation or chemically crosslinked.

11. A soundproof cover for an automobile, which comprises a joint material comprising a thermally expandable material according to claim 9 or 10.

## Patentansprüche

1. Verfahren zur Herstellung eines thermisch ausdehnbaren Materials, umfassend:
in eine vorbestimmte Form formen einer Schaumzusammensetzung umfassend:
100 Gewichtsteile eines (a) vernetzbaren Polymermaterials; und
5 bis 300 Gewichtsteile von (b) einem kristallinen thermoplastischen Harz mit Sauerstoff in seinem Molekül;
ermöglichen, dass das resultierende geformte Produkt ein Vernetzen und Schäumen durchmacht;
Erwärmen und Komprimieren des resultierenden Schaums bei einer Temperatur entsprechend dem Schmelzpunkt des kristallinen thermoplastischen Harzes (b) oder höher; und
Abkühlen des komprimierten Produktes auf eine Temperatur von weniger als der Schmelzpunkt des kristallinen thermoplastischen Harzes (b) während es komprimiert ist, wobei das abgekühlte Produkte durch Wärme aus dem komprimierten Zustand ausdehnbar ist.

2. Thermisch ausdehnbares Material erhältlich durch das Verfahren nach Anspruch 1.

3. Thermisch ausdehnbares Material nach Anspruch 2, wobei das vernetzbare Polymermaterial (a) in der Schaumzusammensetzung ein Gummi ist.

4. Thermisch ausdehnbares Material nach Anspruch 2 oder 3, wobei das vernetzbare Polymermaterial (a) in der Schaumzusammensetzung ein Gummi ist, welcher mit Schwefel oder einer Schwefelverbindung vernetzbar ist.

5. Thermisch ausdehnbares Material gemäß einem der Ansprüche 2 bis 4, wobei das vernetzbare Polymermaterial (a) in der Schaumzusammensetzung ein Ethylen-Propylen-Dien-Kopolymer Gummi ist.

6. Thermisch ausdehnbares Material nach einem der Ansprüche 2 bis 5, wobei das kristalline thermoplastische Harz (b) in der Schaumzusammensetzung ein Ethylen-VinylAcetat-Kopolymer oder ein Ethylen-Acrylsäure-Kopolymer ist.

7. Schallisolierte Abdeckung bzw. Verkleidung für ein Kraftfahrzeug, umfassend ein Fugenmaterial (joint material), umfassend ein thermisch ausdehnbares Material gemäß einem der Ansprüche 2 bis 6.

8. Verfahren zur Herstellung eines thermisch ausdehnbaren Materials, umfassend:
in einer vorbestimmten Form Formen einer Schaumzusammensetzung umfassend ein vernetzbares kristallines thermoplastisches Harz, wobei das Harz ein Ethylen-VinylAcetat-Kopolymer ist;
Vernetzen und Schäumen des resultierenden geformten Erzeugnisses;
Erwärmen und Komprimieren des resultierenden Schaums bei einer Temperatur entsprechend dem Schmelzpunkt des vernetzbaren kristallinen thermoplastischen Harzes oder höher als dieser; und
Abkühlen desselben auf eine Temperatur, welche niedriger als der Schmelzpunkt des vernetzbaren kristallinen thermoplastischen Harzes ist, während er komprimiert ist, wobei das abgekühlte Erzeugnis durch Wärme aus dem komprimierten Zustand ausdehnbar ist.

9. Thermisch ausdehnbares Material erhältlich durch das Verfahren gemäß Anspruch 8.

10. Thermisch ausdehnbares Material nach Anspruch 9, wobei das kristalline thermoplastische Material durch lonisierungsstrahlung oder chemisch vernetzt wird.

11. Schallisolierte Abdeckung Verkleidung für ein Kraftfahrzeug, umfassend Fugenmaterial, umfassend ein thermisch ausdehnbares Material gemäß einem der Ansprüche 9 oder 10.

## Revendications

1. Procédé pour produire un matériau thermiquement expansible, qui comprend :
former, en une forme prédéterminée, une composition de mousse comprenant :
100 parties en masse de (a) un matériau polymère réticulable ; et
5 à 300 parties en masse de (b) une résine thermoplastique cristalline ayant de l'oxygène dans sa molécule ;
permettre au produit formé résultant de subir une réticulation et une expansion ;
chauffer et compresser la mousse résultante à une température égale ou supérieure à un point de fusion de la résine thermoplastique cristalline (b) ; et
refroidir le produit compressé jusqu'à une température inférieure au point de fusion de la résine thermoplastique cristalline (b) quand il est compressé, où le produit refroidi est expansible par la chaleur depuis l'état compressé.

2. Matériau thermiquement expansible pouvant être obtenu par le procédé selon la revendication 1.

3. Matériau thermiquement expansible selon la revendication 2 où le matériau polymère réticulable (a) dans la composition de mousse est un caoutchouc.

4. Matériau thermiquement expansible selon la revendication 2 ou 3 où le matériau polymère réticulable (a) dans la composition de mousse est un caoutchouc réticulable avec le soufre ou un composé du soufre.

5. Matériau thermiquement expansible selon l'une quelconque des revendications 2 à 4 où le matériau polymère réticulable (a) dans la composition de mousse est un caoutchouc de copolymère éthylène-propylène-diène.

6. Matériau thermiquement expansible selon l'une quelconque des revendications 2 à 5 où la résine thermoplastique cristalline (b) dans la composition de mousse est un copolymère éthylène-acétate de vinyle ou un copolymère éthylène-acide acrylique.

7. Panneau insonorisé pour véhicule automobile qui comprend un matériau de joint comprenant un matériau thermiquement expansible selon l'une quelconque des revendications 2 à 6.

8. Procédé pour produire un matériau thermiquement expansible qui comprend :
la formation, en une forme prédéterminée, d'une composition de mousse comprenant une résine thermoplastique cristalline réticulable, ladite résine étant un copolymère éthylène-acétate de vinyle ;
la réticulation et l'expansion du produit formé résultant ;
le chauffage et la compression de la mousse résultante à une température égale ou supérieure à un point de fusion de la résine thermoplastique cristalline réticulable ; et
son refroidissement jusqu'à une température inférieure au point de fusion de la résine thermoplastique cristalline réticulable quand elle est compressée, où le produit refroidi est expansible par la chaleur depuis l'état compressé.

9. Matériau thermiquement expansible pouvant être obtenu par le procédé selon la revendication 8.

10. Matériau thermiquement expansible selon la revendication 9 où la résine thermoplastique cristalline est réticulée par un rayonnement ionisant ou est réticulée chimiquement.

11. Panneau insonorisé pour véhicule automobile qui comprend un matériau de joint comprenant un matériau thermiquement expansible selon la revendication 9 ou 10.
